(19) Europäisches Patentamt

European Patent Office

Office européen des brevets

(11) **EP 4 571 649 A1**

(12) **EUROPEAN PATENT APPLICATION**

(43) Date of publication:
**18.06.2025 Bulletin 2025/25**

(21) Application number: **24219831.5**

(22) Date of filing: **13.12.2024**

(51) International Patent Classification (IPC):
**G06T 9/00** *(2006.01)* **G06T 9/40** *(2006.01)*
**H04N 19/597** *(2014.01)*

(52) Cooperative Patent Classification (CPC):
**G06T 9/001; G06T 9/40; H04N 19/597**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.12.2023 US 202363609917 P**

(71) Applicant: **Comcast Cable Communications LLC**
**Philadelphia, Pennsylvania 19103 (US)**

(72) Inventors:
• **TAQUET, Jonathan**
**Philadelphia, 19103 (US)**
• **LASSERRE, Sébastien**
**Philadelphia, 19103 (US)**

(74) Representative: **V.O.**
**P.O. Box 87930**
**2508 DH Den Haag (NL)**

(54) **MODEL SELECTION FOR CODING POINT CLOUD GEOMETRY**

(57) Systems, apparatuses, methods, and computer-readable media are described for coding point cloud geometry using selected models. Dense portions of a point cloud may be coded using one model (e.g., a triangle-based model such as a TriSoup model), and non-dense portions may be coded using another model (e.g., a tree-based model such as a space-partitioning tree). Each model may be selected from a list of a plurality of models. Model information for each portion of the point cloud may be encoded or decoded. By representing portions of the point cloud using models, compression efficiency and/or modeling capability may be improved.

FIG. 13

**Description**

## CROSS REFERENCE TO RELATED APPLICATIONS

This application claims the benefit of U. S. Provisional Application No. 63/609,917 filed on December 14, 2023. The above referenced application is hereby incorporated by reference in their entirety.

## BACKGROUND

An object or scene may be described using volumetric visual data consisting of a series of points. The points may be stored as a point cloud format that includes a collection of points in three-dimensional space. As point clouds can get quite large in data size, sending and processing point cloud data may need a data compression scheme that is specifically designed with respect to the unique characteristics of point cloud data.

## SUMMARY

The following summary presents a simplified summary of certain features. The summary is not an extensive overview and is not intended to identify key or critical elements.

A point cloud may be represented or coded (e.g., encoded or decoded) by a model. Points in a point cloud may be distributed unevenly. Some portions of the point cloud may have a higher density of points than other portions. Dense portions of the point cloud may be represented by one model (e.g., a triangle-based model such as a TriSoup model), and non-dense portions may be represented by another model (e.g., a tree-based model such as a space-partitioning tree). Each model may be selected from a plurality of models. Model information may be encoded or decoded, for example, for use in encoding or decoding geometry information of a portion of the point cloud. By representing portions of the point cloud using models, advantages may be achieved such as improved compression efficiency and/or modeling capability.

These and other features and advantages are described in greater detail below.

## BRIEF DESCRIPTION OF THE DRAWINGS

Some features are shown by way of example, and not by limitation, in the accompanying drawings. In the drawings, like numerals reference similar elements.

FIG. 1 shows an example point cloud coding system.
FIG. 2 shows an example Morton order.
FIG. 3 shows an example scanning order.
FIG. 4 shows an example neighborhood of cuboids for entropy coding the occupancy of a child cuboid.
FIG. 5 shows an example of a dynamic reduction function DR that may be used in dynamic Optimal Binary Coders with Update on the Fly (OBUF).
FIG. 6 shows an example method for coding occupancy of a cuboid using dynamic OBUF.
FIG. 7 shows an example of an occupied cuboid.
FIG. 8A shows an example cuboid corresponding to a TriSoup node.
FIG. 8B shows an example refinement to the TriSoup model.
FIG. 8C shows an example of coding a centroid residual value.
FIG. 9A and FIG. 9B show examples of voxelization.
FIG. 10A and FIG. 10B show an example of occupied sub-volumes obtained from an occupancy octree.
FIG. 11 shows an example of occupied sub-volumes.
FIG. 12 shows an example selection of a model for a sub-volume.
FIG. 13 shows an example selection of different models for a plurality of sub-volumes.
FIG. 14 shows an example method for encoding the geometry of a portion of a point cloud.
FIG. 15 shows an example method for encoding the geometry of a point cloud.
FIG. 16 shows an example for encoding a model.
FIG. 17 shows an example method performed by a context-adaptive arithmetic encoder.
FIG. 18 shows an example method for decoding the geometry of a portion of a point cloud.
FIG. 19 shows an example method for decoding the geometry of a point cloud.
FIG. 20 shows an example for decoding a model.
FIG. 21 shows an example of an occupied sub-volume corresponding to occupied non-leaf nodes.
FIG. 22 shows an example method for encoding a point cloud geometry in a bitstream.
FIG. 23 shows an example method for decoding a point cloud geometry from a bitstream.

FIG. 24 shows an example computer system in which examples of the present disclosure may be implemented.
FIG. 25 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

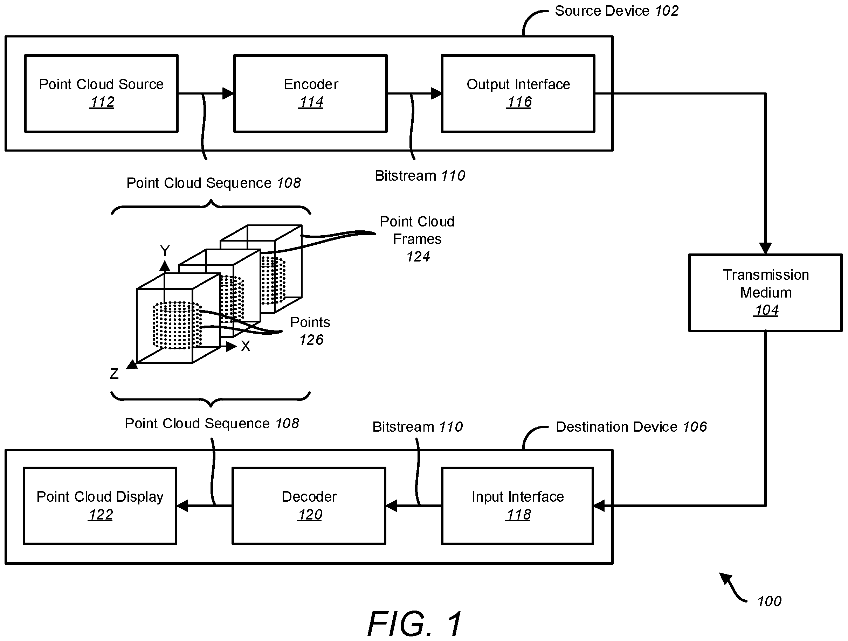

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor).

The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel (also referred to as a volumetric pixel) may be considered as a 3D extension of pixels corresponding to the 2D image grid coordinates. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.32 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume (e.g., cuboid), may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, a maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary value of "1" in the 1-byte occupancy word. Unoccupied sub-cuboids may be each represented or indicated by a binary value of "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

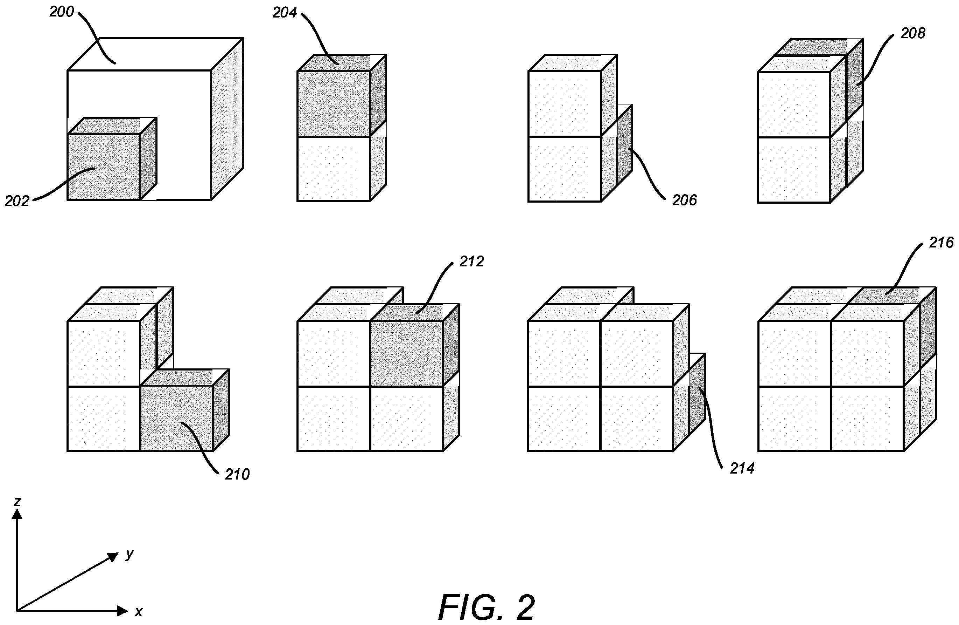

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

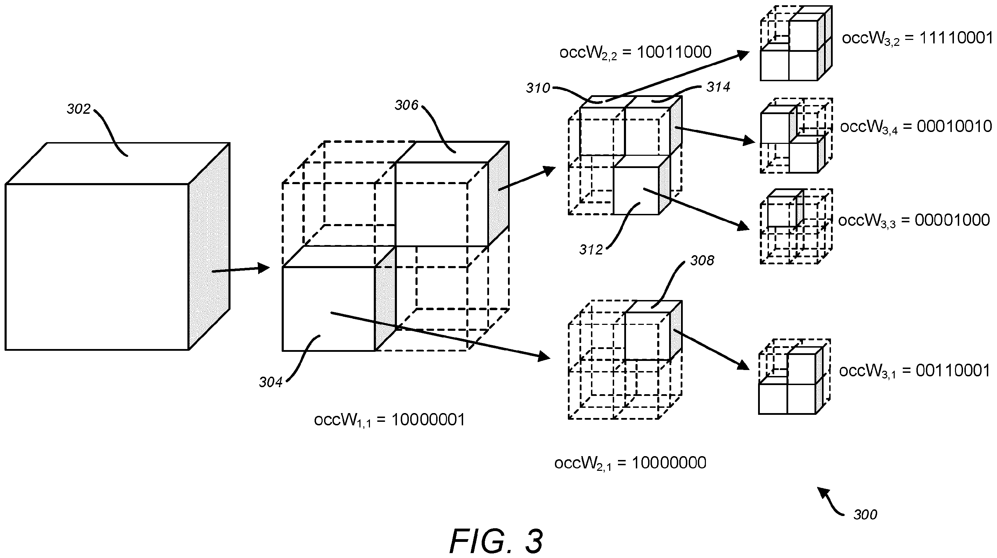

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

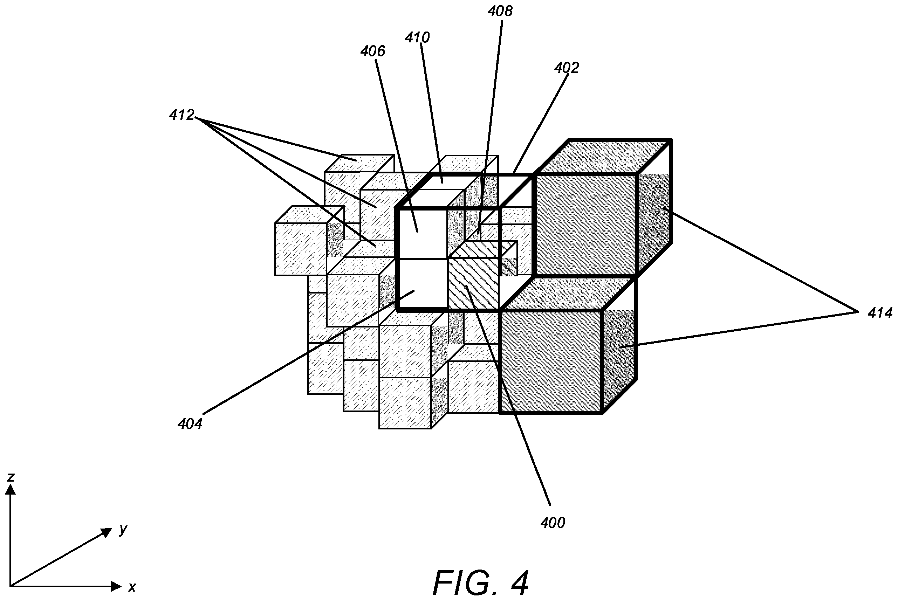

FIG. 4 shows an example neighborhood of cuboids for entropy coding the occupancy of a child cuboid. More specifically, FIG. 4 shows an example neighborhood of cuboids with already-coded occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current

**EP 4 571 649 A1**

child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

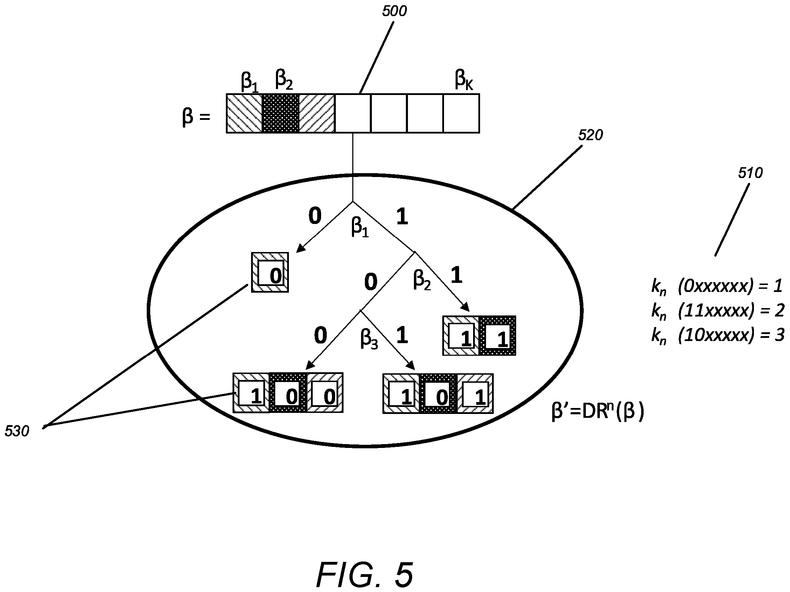

FIG. 5 shows an example of a dynamic reduction function DR that may be used in dynamic OBUF. The dynamic reduction function DR may be obtained by masking bits $\beta_j$ of occupancy configurations 500:

$$\beta = \beta_1 \dots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by:

$$\beta' = DR^n(\beta) = \beta_1 \dots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable NV(P') for all dynamically reduced occupancy configurations $\beta' = DR^n(\beta)$. The corresponding number (e.g., quantity) of visits $NV(\beta^{V'})$ may be increased by one, for example, after each instance of coding of an occupancy bit based on an occupancy configuration $\beta^V$. If this number (e.g., quantity) of visits $NV(\beta^{V'})$ is greater than a threshold $th_V$,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \dots \beta^V_{k_n(\beta)}0 \ \ and \ \ \beta^{1'} = \beta^{V'}1 = \beta^V_1 \dots \beta^V_{k_n(\beta)}1$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero

$$NV(\beta^{0'}) = NV(\beta^{1'}) = 0. \qquad (1)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry $LUT[\beta^{V'}]$ may be replaced by the two new entries $LUT[\beta^{0'}]$ and $LUT[\beta^{1'}]$ that are

initialized by the coder index associated with $\beta^{V'}$. The corresponding LUT entry LUT[$\beta^{V'}$] may be replaced by the two new entries LUT[$\beta^{0'}$] and LUT[$\beta^{1'}$] that are initialized by the coder index associated with $\beta^{V'}$, for example, if a dynamically reduced occupancy configuration $\beta^{V'}$ is replaced by the two new dynamically reduced occupancy configurations $\beta^{0'}$ and $\beta^{1'}$,

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^0(\beta)$. The replacement of the dynamically reduced to $\beta^{V'}$ by $\beta^{0'}$ and $\beta^{1'}$ may correspond to growing the tree $T^n$ from the leaf node associated with $\beta^{V'}$, for example, by attaching to it two new nodes associated with $\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array NV[P'] and the LUT[$\beta'$] of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_1$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

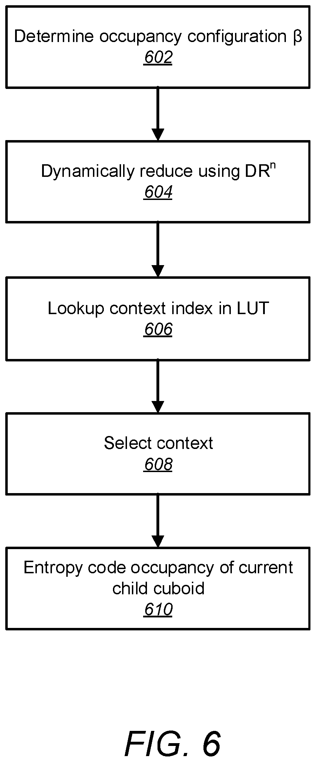

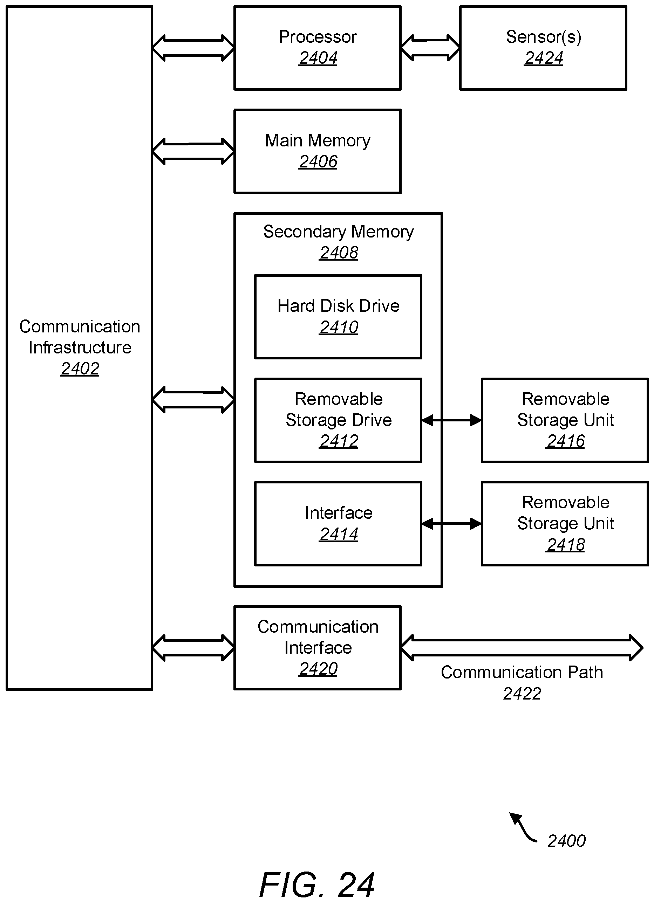

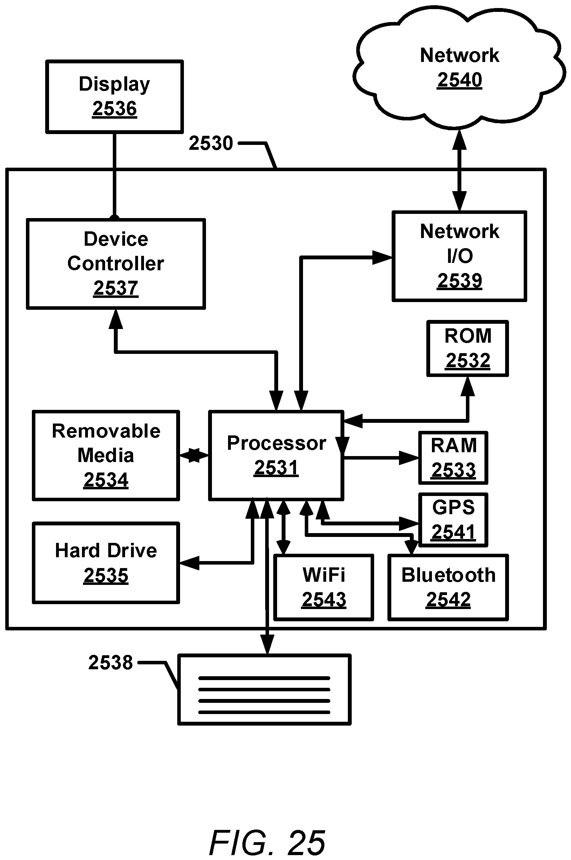

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2400 in FIG. 24, and/or an example computing device 2530 in FIG. 25.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index LUT[P'] in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index LUT[$\beta'$], for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

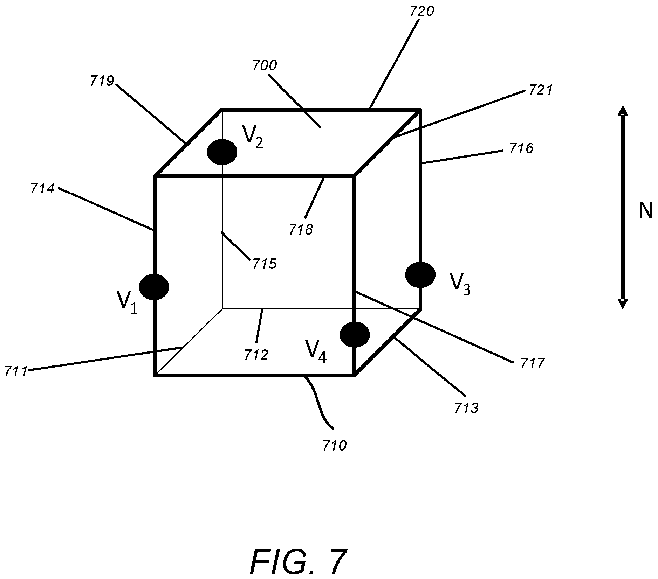

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position (e.g., $p_k$) for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index LUT [$\beta_{TS}'$] may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position ($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{N_b}$ quantization intervals. By doing so, the TriSoup vertex position ($p_k$) may be represented by $N_b$ bits ($p_k^j, j=1, \ldots, N_b$) that may be individually coded by the dynamic OBUF scheme as well as the bit corresponding to the presence flag ($s_k$). The neighborhood configuration $\beta_{TS}$, the OBUF reduction function $DR^n$, and the context index may depend on the nature, characteristic, and/or property of the coded bit (e.g., a presence flag ($s_k$), a highest position bit ($p_{k1}$),

a second highest position bit ($p_{k2}$), etc.) of the coded bit (e.g., presence flag ($s_k$), highest position bit ($p_k^1$), second highest position bit ($p_k^2$), etc.). There may practically be several dynamic OBUF schemes, each dedicated to a specific bit of information (e.g., presence flag ($s_k$) or position bit ($p_k^j$)) of the vertex information.

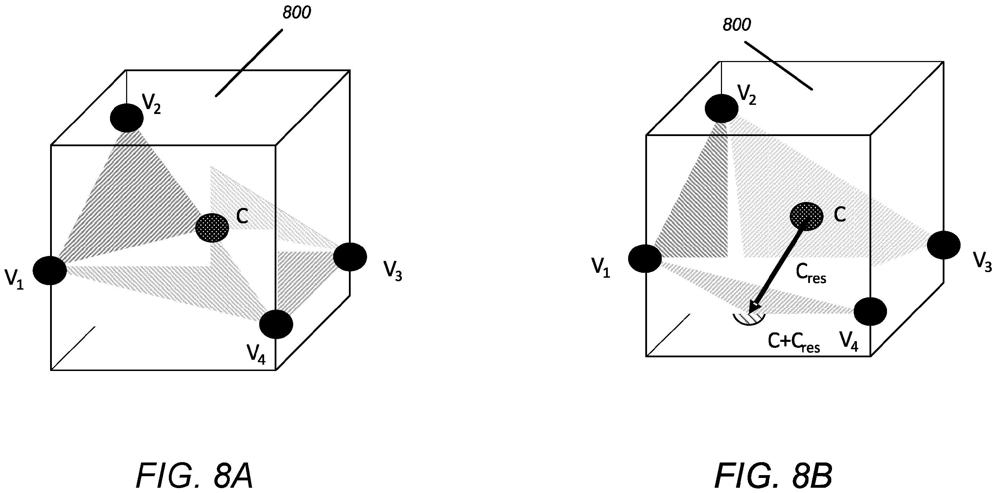

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C, V_2V_3C, ..., V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value (e.g., vector). A centroid residual vector $C_{res}$ may be coded into the bitstream. A centroid residual vector $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

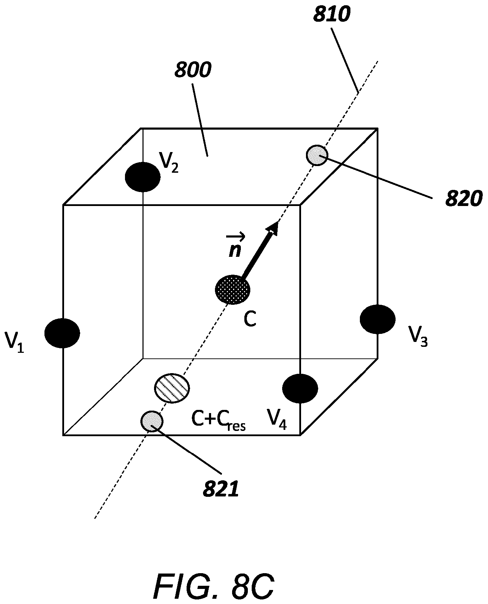

FIG. 8C shows an example of coding a centroid residual value (e.g., vector). More specifically, FIG. 8C shows a more detailed example of coding a centroid residual value (e.g., vector) $C_{res}$ in/from the bitstream such that an adjusted centroid $C+C_{res}$ is used instead of centroid C for generating TriSoup triangles of a cuboid 800 (corresponding to a TriSoup node) corresponding to a portion of a point cloud. The triangles may be generated, for example, based on adjusted centroid $C+C_{res}$ and adjacent pairs of vertices of an ordering of the vertices $V_1$-$V_4$, determined as described herein with respect to FIG. 8A. As described herein, the TriSoup triangles of the cuboid may be voxelized at the decoder, for example, to generate voxels representing (or modeling) the portion, of the point cloud, corresponding to the cuboid. A unit vector $\vec{n}$ (i.e., also referred to as a normalized vector) may be determined as a normalized mean vector of normal vectors to the triangles $(V_1V_2C, V_2V_3C, ..., V_KV_1C)$ constructed by centroid C and pairs of the vertices of the cuboid by pivoting around the centroid C (e.g., as described herein with respect to FIG. 8A). For example, the unit vector $\vec{n}$ may be determined as the normalized vector, for example, based on a mean of cross-products representing areas of the triangles $(\overrightarrow{V_1C} \times \overrightarrow{V_2C} + \overrightarrow{V_2C} \times \overrightarrow{V_3C} + \cdots + \overrightarrow{V_KC} \times \overrightarrow{V_1C})/K$. For example, the unit vector $\vec{n}$ may be determined by dividing the mean vector (n) by the norm (or length) of the mean vector (i.e., $\vec{n} = n / \|n\|$).

A value resulting from each cross product is equal to an area of a parallelogram formed by the two vectors in the cross product. The value may be representative of an area of a triangle formed by the two vectors, for example, because the area of the triangle is equal to half of the value. The vector $\vec{n}$ it may be indicative of the direction normal to a local surface representative of the portion of the point cloud. The vector $\vec{n}$ it may be indicative of the direction normal to a local surface representative of the portion of the point cloud, for example, because the vector $\vec{n}$ it may indicate a direction of the triangles (e.g., TriSoup triangles) representing (e.g., modeling) the portion of the point cloud. A one-component residual $\alpha_{res}$ along the line $(C, \vec{n})$ 810 may be coded, instead of a 3D residual vector, for example, to maximize the effect of the centroid residual and/or minimize its coding cost.

$$C_{res} = \alpha_{res}\vec{n}$$

The residual value $\alpha_{res}$ may be determined, for example, by the encoder as the intersection between the current point cloud and the line $(C, \vec{n})$, which may be along the same direction of the normalized vector $\vec{n}$. For example, a set of points, of the portion of the point cloud, closest (e.g., within a threshold distance, a threshold number/quantity of points) to the line may be determined. The set of points may be projected on the line and the residual value $\alpha_{res}$ may be determined as the mean component along the line of the projected points. The mean may be determined, for example, as a weighted mean whose weights depend on the distance of the set of points from the line. For example, a point from the set closer to the line may have a higher weight than another point from the set farther from the line.

The residual value $\alpha_{res}$ may be quantized. For example, the residual value $\alpha_{res}$ may be quantized by a uniform quantization function having quantization step similar to the quantization precision of the TriSoup vertices $V_k$. By quantizing the residual value $\alpha_{res}$ by a uniform quantization function having quantization step similar to the quantization precision of the TriSoup vertices $V_k$, the quantization error may be maintained to be uniform over all vertices $V_k$ and $C+C_{res}$ such that the local surface is uniformly approximated.

The residual value $\alpha_{res}$ may be binarized and entropy coded into the bitstream. The residual value $\alpha_{res}$ may be binarized and entropy coded into the bitstream, for example, by using a unary-based coding scheme. The residual value

$\alpha_{res}$ may be coded, for example, using a set of flags. For example, a flag $f_0$ may be coded to indicate if the residual value $\alpha_{res}$ is equal to zero. No further syntax elements may be needed. No further syntax elements may be needed, for example, if the flag $f_0$ indicates the residual value $\alpha_{res}$ is zero. A sign bit indicating a sign may be coded and/or the residual magnitude $|\alpha_{res}|$-1 may be coded using an entropy code. A sign bit indicating a sign may be coded and/or the residual magnitude $|\alpha_{res}|$-1 may be coded using an entropy code, for example, if the flag $f_0$ indicates the residual value $\alpha_{res}$ is not zero. For example, the residual magnitude may be coded using a unary coding scheme that may code successive flags $f_i$ ($i \geq 1$) indicating if the residual value magnitude $|\alpha_{res}|$ is equal to 'i'. A coder (e.g., a binary entropy coder) may binarize the residual value $\alpha_{res}$ into the flags $f_i$ ($i \geq 0$) and code (e.g., entropy code) the binarized residual value as well as the sign bit.

Compression of the residual value $\alpha_{res}$ may be improved, for example, by determining bounds as shown in FIG. 8C. The line $(C, \vec{n})$ 810 (e.g., as shown in FIG. 8C) may intersect the current cuboid 800 (corresponding to a TriSoup node) at two bounding points 820 and 821, and the encoder may impose that the adjusted centroid vertex $C+C_{res}$ is located between the two bounding points 820 and 821. These bounding points 820 and 821 may bound the residual value $\alpha_{res}$ (which may be quantized) as belonging to an integral interval [m, M], where $m \leq 0 \leq M$. By doing so, some bits of the binarized residual value $\alpha_{res}$ may be inferred. For example, the residual value $\alpha_{res}$ may equal to zero. The residual value $\alpha_{res}$ may (e.g., necessarily) equal to zero, for example, if m=M=0. The sign bit may be positive. The sign bit may be (e.g., necessarily) positive, for example, if m=0<M. Magnitude $|\alpha_{res}|$ may be determined to be bounded by either $|m|$ or M such that the magnitude may be coded by a truncated unary coding scheme that may infer the value of the last of successive flags $f_i$ ($i \geq 1$) Magnitude $|\alpha_{res}|$ may be determined to be bounded by either $|m|$ or M such that the magnitude may be coded by a truncated unary coding scheme that may infer the value of the last of successive flags $f_i$ ($i \geq 1$), for example, if the residual value $\alpha_{res}$ is not equal to zero and its sign is known.

The binary entropy coder used to code the binarized residual value $\alpha_{res}$ may be a context-adaptive binary arithmetic coder (CABAC) such that the probability model (also referred to as a context or a specific entropy coder) used to code at least one bit (e.g., $f_i$ or sign bit) of the binarized residual value $\alpha_{res}$ may be updated depending on precedingly coded bits. The probability model of the binary entropy coder may be determined, for example, based on contextual information such as the values of the bounds m and M, the position of vertices $V_k$, and/or the size of the cuboid. The selection of the probability model (i.e., also referred equivalently as an entropy coder or context) may be performed by a dynamic OBUF scheme with the contextual information described herein as inputs.

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

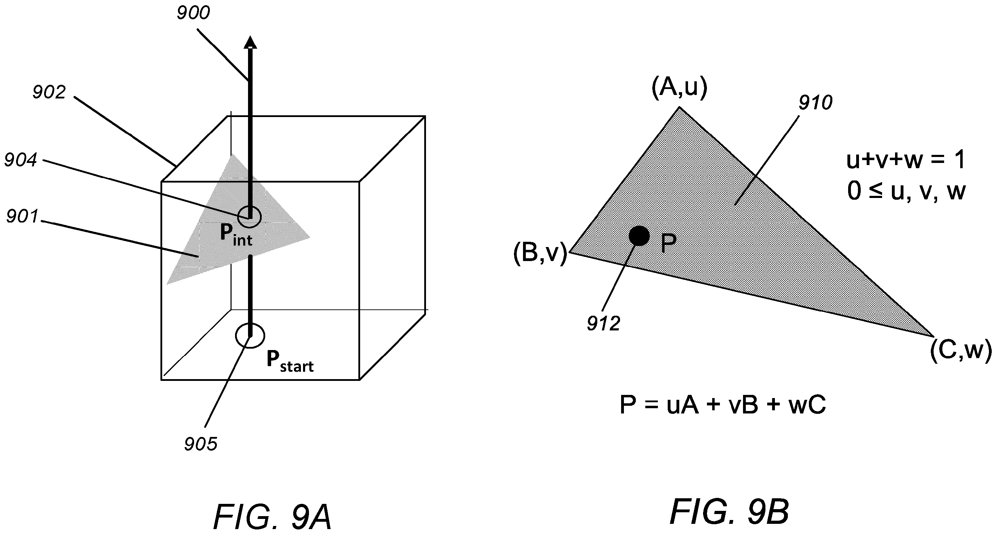

FIG. 9A shows an example of voxelization. More specifically, FIG. 9A shows an example of voxelization using ray tracing. Ray-triangle intersection algorithms (e.g., the Möller-Trumbore algorithm) may rely on launching rays to determine whether rays intersect with TriSoup triangles and if so, at what points of the TriSoup triangles. Rays may be launched from integral coordinates that correspond to the centers of voxels. Rays (e.g., rays 900 in FIG. 9A) may be launched parallel to one of the three axes (or coordinate axes) of the 3D space, starting from integral coordinates (e.g., integer coordinates) such as an origin point 905 (shown as origin or starting point $P_{start}$). An intersection point 904 (e.g., the intersection $P_{int}$) may exist between ray 900 and a TriSoup triangle 901 belonging to a cuboid (e.g., cube) 902. The intersection point 904 may be rounded (e.g., quantized) to obtain a decoded point corresponding to a voxel. The cuboid (e.g., cube) 902 may correspond to a TriSoup node. For example, a ray, launched parallel to a coordinate axis in 3D space, may intersect a TriSoup triangle, if and only if the projection, along the ray direction, of the center of a voxel belongs to the TriSoup triangle. The ray may be determined to intersect the TriSoup triangle, for example, if the point of intersection corresponds to the center of the voxel. This intersection may be found (e.g., determined), for example, by using a ray-triangle intersection algorithm (e.g., tracing or ray casting technique) such as the Möller-Trumbore algorithm to generate voxels representing the triangle. Ray tracing techniques such as the Möller-Trumbore algorithm is based on generating, with respect to a triangle, barycentric coordinates of points of intersection between rays and a plane of the triangle. Points of the triangle may be determined from the barycentric coordinates.

FIG. 9B shows an example of voxelization. More specifically, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). For example, the ray may be launched parallel to one of the three coordinate axes in 3D space. This intersection point 912 may be uniquely represented as a sum of the three vertices of TriSoup triangle 910:

$$P = uA + vB + wC$$

under the condition u + v + w = 1. Any point P of the plane (containing TriSoup triangle 910) has unique coordinates (u,v,w) in the barycentric coordinate system. A point with barycentric coordinates (u,v,w) includes an ordered triple of numbers u, v, and w. A point with barycentric coordinates (u,v,w) that sum to 1 (i.e., u + v + w = 1) is known as homogeneous barycentric coordinates or normalized barycentric coordinates. The barycentric coordinates of the intersection point with respect to TriSoup triangle 910 may be determined using, for example, the well-known Möller-Trumbore algorithm.

The three vertices A, B, C of TriSoup triangle 910 may have respective barycentric coordinates A(1,0,0), B(0,1,0) and C(0,0,1), for example, by converting points with Cartesian coordinates in 3D space to homogeneous barycentric coordinates. The convex hull (i.e., TriSoup triangle 910) of the three vertices A, B, and C is equal to the set of all points such that the barycentric coordinates u, v, and w is each greater than or equal to zero:

$$0 \leq u, v, w$$

The intersection point may be determined to belong to TriSoup triangle 910. The intersection point may be determined to belong to TriSoup triangle 910, for example, based on the intersection point having barycentric coordinates with an ordered triple of values that is each greater than or equal to zero. The intersection point may be determined to not belong to TriSoup triangle, for example, if at least one of barycentric coordinates (i.e., one of u, v, or w) is negative or less than 0. The intersection point may be determined to not belong to TriSoup triangle, for example, because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

A point cloud may be represented by a tree-based model. In at least some technologies, the geometry of a sub-volume of a spatial partitioning of a volume encompassing a point cloud may be represented by a tree-based model. For example, the sub-volume may correspond to an occupied leaf node as described herein with respect to FIG. 3. The tree-based model may represent the geometry of the sub-volume. The tree-based model may represent the geometry of the sub-volume, for example, the at least one point of the point cloud contained in the sub-volume. The tree-based model may comprise a space-partitioning tree (or a spatial partitioning tree, e.g., an octree). The space-partitioning tree may be, for example, a local occupancy tree (e.g., similar to the occupancy tree as described herein with respect to FIG. 3).

Information of the tree-based model (or tree-based model information) may comprise a local tree structure. The local tree structure may be obtained, for example, by recursively splitting the sub-volume into further sub-volumes. The local tree structure may have a root node associated with the sub-volume and leaf nodes associated with the further sub-volumes. The recursive splitting may stop, for example, if/when a maximum depth level of the local tree structure is reached. The recursive splitting may stop, for example, if/when each occupied sub-volume may have a volume corresponding to one voxel. The local tree structure may be a local occupancy tree (e.g., similar to the occupancy tree as shown in FIG. 3). The local tree structure may be a portion of a master occupancy tree representing a spatial partitioning of the volume encompassing the point cloud.

The tree-based model information may be coded (e.g., encoded or decoded, e.g., entropy coded/encoded/decoded). The tree-based model information may be coded (e.g., encoded or decoded), for example, based on tree-based model information of already coded neighbors. For example, the tree-based model information of a current sub-volume may be coded (e.g., encoded or decoded), for example, based on tree-based model information of at least one already coded (e.g., encoded or decoded) neighboring sub-volumes. For example, the current sub-volume may be associated with a current node of a master occupancy tree. The neighboring sub-volumes may be associated with already coded and occupied neighboring nodes of the master occupancy tree. For example, the already coded (e.g., encoded or decoded) neighboring sub-volumes may be adjacent or spatially close to the current sub-volume (e.g., as shown in FIG. 4).

The occupancy bits of the tree-based model information of the current sub-volume may be coded (e.g., encoded or decoded). The occupancy bits of the tree-based model information of the current sub-volume may be coded (e.g., encoded or decoded), for example, if the tree-based model information includes the occupancy bits of occupancy words of nodes of a local occupancy tree. The occupancy bits of the tree-based model information of the current sub-volume may be coded (e.g., encoded or decoded), for example, based on the occupancy bits of the tree-based model information of at least one already coded (e.g., encoded or decoded) neighboring sub-volume.

The tree-based model information of the current sub-volume may be coded (e.g., encoded or decoded), for example, using OBUF or dynamic OBUF. The tree-based model information of the current sub-volume may be coded (e.g., encoded or decoded), for example, based on tree-based model information of at least one already-coded neighboring sub-volume as described herein with respect to FIGS. 3, 4, 5, and 6.

A point cloud may be represented by a triangle-based model. The geometry of a current sub-volume of a spatial partitioning of a volume encompassing a point cloud may be represented by a triangle-based model. The triangle-based model may be, for example, a TriSoup-based model. The information of a triangle-based model (e.g., a TriSoup-based model) may include vertex information as described herein with respect to FIGS. 7 and 8.

TriSoup-based model information of the current sub-volume may be coded (e.g., encoded or decoded). The TriSoup-based model information of the current sub-volume may be coded (e.g., encoded or decoded), for example, based on TriSoup-based model information of at least one already coded (e.g., encoded or decoded) neighboring sub-volume. TriSoup-based model information of the current sub-volume corresponding to a TriSoup node may be coded (e.g., encoded or decoded), for example, by coding (e.g., encoding or decoding) vertex information associated with the TriSoup node. TriSoup-based model information of the current sub-volume corresponding to a TriSoup node may be coded, for example, by coding (e.g., encoding or decoding) vertex information of each vertex along TriSoup edges of the TriSoup triangles belonging to the TriSoup node. The TriSoup node may comprise/be an occupied leaf node of the master occupancy tree. The coding (e.g., encoding or decoding) of the vertex information of a TriSoup edge may be, for example, based on vertex information of at least one already coded (e.g., encoded or decoded) neighboring TriSoup node of the master occupancy tree. The vertex information may comprise/be, for example, a TriSoup vertex presence flag and/or a position of a TriSoup vertex.

A tree-based model may be versatile. For example, a tree-based model may represent any type of point clouds in a lossless format. A tree-based model may not be suitable for lossy coding. For example, a tree-based model may require much higher bitrate to store or transmit the tree-based model information.

A triangle-based model (e.g., TriSoup-based model) may be suitable for lossy coding. For example, a triangle-based model may be efficient (e.g., very efficient) at lossy compressing dense (or smooth) point clouds. Voxels may have adjacent neighbors in a dense point cloud such that a surface (e.g., geometry or surface geometry) defined by the point cloud may be approximated by a set of triangles. A triangle-based model may not be suitable for non-dense (or non-smooth) point clouds. Non-dense (or non-smooth) point clouds may be approximated inadequately by triangles.

In at least some applications, point clouds may be mixed point clouds. A mixed point cloud may comprise dense (or smooth) portions and non-dense (e.g., sparse, "shaky") portions. For example, a mixed point cloud may be mostly dense, and may comprise some portions that are sparse (e.g., locally sparse or shaky) and poorly represented by triangles. For example, a point cloud may represent a room. Walls and furniture in the room may correspond to dense portions of the point cloud. An indoor plant may correspond to a non-dense (e.g., sparse, "shaky") portion of the point cloud. As another example, a point cloud may represent a human head. The face may correspond to a dense or smooth portion of the point cloud, and hair may correspond to a non-dense (e.g., sparse, "shaky") portion of the point cloud. Compressing these mixed point clouds by mean of only one model may not be optimal. For example, using the tree-based model alone may have decreased compression capability (or limited compression capability, or no compression capability). Using the triangle-based model alone may have decreased modeling capability (or limited modeling capability, or no modeling capability).

One approach to code mixed point clouds may be to segment the overall mixed point cloud into dense and "shaky" portions, put each portion into a slice (e.g., a brick or a data unit), and code each slice based on a locally adequate tree-based or triangle-based model. This approach may be viable, for example, if portions of the point cloud are not intricate. At least some portions of the point cloud may be intricate. A large quantity of (e.g., many) slices may be required, for example, for having no intricate portion. A large quantity of slices may lead to decreased compression capability. The decreased compression capability may be due to slice header overhead and/or the absence of prediction between portions belonging to different slices. A slice-based approach does not provide acceptable spatial flexibility and/or compression performance. It would be beneficial to have a new representation capable of adapting locally to the nature (e.g., smooth or dense, sparse or "shaky") of a point cloud so as to combine compression capability and versatility.

Examples described herein are related to local determination and/or signaling of models (e.g., model information indicating the models) representative of the geometry of portions of a point cloud. The portions of the point cloud may correspond to (e.g., belong to) sub-volumes of a volume encompassing the (e.g., whole) point cloud. The determination of the models may be local. For example, a model for coding the geometry of a portion of a point cloud may be determined for each sub-volume containing a portion of the geometry of the point cloud.

The use of sub-volumes to partition the volume encompassing a (e.g., whole) point cloud and/or the local determination of the models may allow a local selection of coding models for portions of the point cloud geometry contained in the sub-volumes. Local models may be selected, for example, based on using the sub-volumes. The locally selected models may be capable of representing (e.g., adequately) the portions of the point cloud with a low geometry distortion and minimum required compression capabilities. The models may be locally selected from a list of possible models. The local selection of models based on (e.g., per, for each) sub-volume may be performed, for example, based on a Rate Distortion Optimization (RDO) metric (and/or cost).

Points (e.g., decoded and reconstructed as voxels) of a point cloud may belong to a 3D space that is mainly empty. Sub-volumes may be determined, for example, by partitioning the 3D space into cubic blocks. A topology of potential sub-volumes may be set (e.g., a priori) by partitioning the 3D space, for example, into cubic blocks having a same size. Not all potential sub-volumes will contain a point (voxel) of the point cloud. A sub-volume may be either an unoccupied (or de-activated) sub-volume or an occupied (or activated) sub-volume. An occupied (or activated) sub-volume may be, for example, a sub-volume that contains point cloud geometry (or at least one point of the point cloud). A sub-volume may be an occupied sub-volume, for example, if the sub-volume comprises a portion of the point cloud geometry (i.e., at least one point of the point cloud). A sub-volume may be an unoccupied sub-volume, for example, if the sub-volume does not comprise any portion (e.g., any point) of the point cloud.

A decoder may decode (e.g., from a bitstream) volume information associated with the sub-volumes. A decoder may decode, from a bitstream, volume information indicating the sub-volumes that partition the volume encompassing the point cloud geometry and/or the occupied sub-volumes (i.e., sub-volumes that contain portions of the point cloud geometry). The decoder may decode a model representative of the geometry of a portion of a point cloud. The portion of the point cloud may correspond to (e.g., belong to) an (e.g., each) occupied sub-volume. The decoder may decode geometry information corresponding to the geometry of the portion of the point cloud. The portion of the point cloud may be contained in each occupied sub-volume. The decoder may decode geometry information corresponding to the geometry of the portion of the point cloud contained in each occupied sub-volume, for example, from the bitstream and based on the model associated with each occupied sub-volume. The decoder may reconstruct the portion of the point cloud geometry, for example, based on the decoded geometry information. Different models may be determined and/or associated with different occupied sub-volumes, for example, to permit different portions of the point cloud geometry to be coded with different geometry representations.

The volume encompassing a point cloud geometry may be partitioned into non-overlapping partitions of sub-volumes. The volume information may indicate the sub-volume of the volume. The volume information may indicate a topology of sub-volumes of the volume. The volume information may indicate whether each of the sub-volumes is an occupied sub-volume containing a portion (e.g., at least a point) of the point cloud. The volume information may include a space-partitioning tree that partitions the volume into a set of sub-volumes. The volume information may indicate one sub-volume of the set of sub-volumes being associated with at least one occupied leaf node of an occupancy tree. The volume information may indicate one sub-volume being associated with more than one occupied leaf node of the occupancy tree.

The space-partitioning tree may be determined, for example, based on an occupancy tree having a root node being associated with the volume. The space-partitioning tree might not be (e.g., is not necessarily) aligned with the occupancy tree for coding point cloud geometry. Sub-volumes of the space-partitioning tree may be generally larger than sub-volumes corresponding to volumes associated with occupied leaf nodes of the occupancy tree. Sub-volumes of the space-partitioning tree may be generally larger than sub-volumes corresponding to volumes associated with occupied leaf nodes of the occupancy tree, for example, to reduce signaling overhead, as model selection might not (e.g., does not necessarily) need to be specified at an occupied leaf node granularity. Signaling (e.g., further signaling) of the sub-volume topology may not be needed, for example, if occupied sub-volumes comprise portions of sub-volumes indicated by TriSoup nodes. The occupied sub-volumes may be derived (e.g., determined) from the occupancy tree coding the point cloud geometry. Volume information may be associated with (e.g., determined and/or signaled for) each TriSoup node. Each TriSoup node may be equivalent to each occupied leaf node of the occupancy tree. Reference to sizes of leaf nodes or portions of point cloud geometry being contained in leaf nodes may indicate the sizes of sub-volumes (e.g., cuboids) indicated by the leaf nodes and the portions of point cloud geometry being contained in those sub-volumes.

The space-partitioning tree may link (e.g., associate) occupied sub-volumes with models coding portions of the point cloud geometry contained in sub-volumes. Various types of space-partitioning trees may be used including, for example a binary space partitioning (BSP) tree, a bounding hierarchy volume (BHV) tree, a k-dimensional (k-d) tree, a quadtree, and/or an octree, etc.

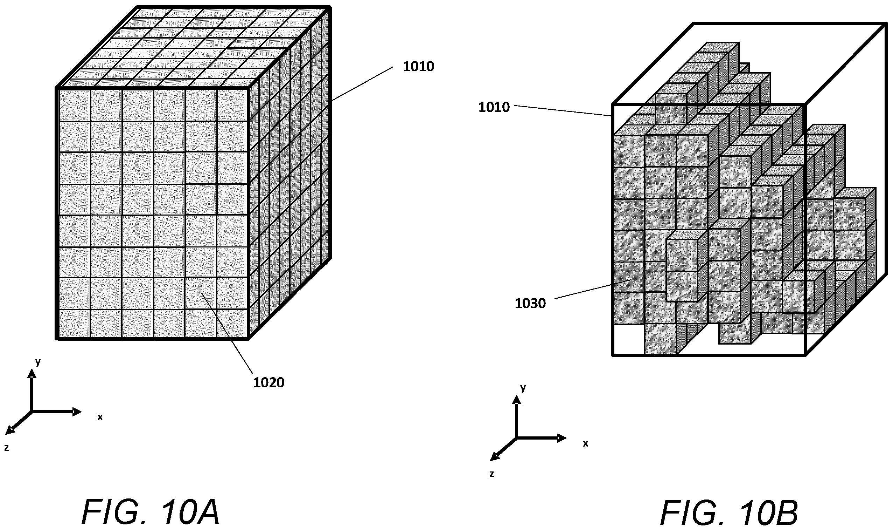

FIG. 10A and FIG. 10B show an example of occupied sub-volumes obtained from an occupancy octree. As described herein, sub-volumes may be coded with other types of space-partitioning trees (or occupancy trees) such as a binary space partitioning (BSP) tree, a bounding hierarchy volume (BHV) tree, a k-dimensional (k-d) tree, and/or a quadtree, etc.

In FIG. 10A, a volume 1010 may encompass a point cloud geometry. The volume 1010 may be partitioned into non-overlapping sub-volumes 1020. The volume 1010 may be partitioned into non-overlapping sub-volumes 1020, for example, based on (e.g., according to) an occupancy tree. For example, the occupancy tree may be an octree. In the occupancy tree (e.g., octree), each cuboid may be split into eight sub-cuboids with the same size and shape at a given depth level of the occupancy tree. FIG. 10B shows occupied sub-volumes 1030 of the volume 1010. The occupied sub-volumes 1030 may correspond to occupied nodes of the occupancy octree. Each occupied sub-volume 1030 may contain at least one point of the point cloud geometry.

Sub-volumes 1020 may correspond to TriSoup nodes of an occupancy tree coding the point cloud geometry (e.g., as shown in FIGS. 2-4). The sizes of the sub-volumes may be different from the TriSoup node sizes. For example, the sizes of the sub-volumes may be generally larger than the TriSoup node sizes. In some examples, the sizes of the sub-volumes may be smaller than the TriSoup node sizes. Each of occupied sub-volume 1030 may contain a portion of the point cloud geometry. The portion of the point cloud geometry may be represented by one or more (or a portion/partial of) TriSoup nodes.

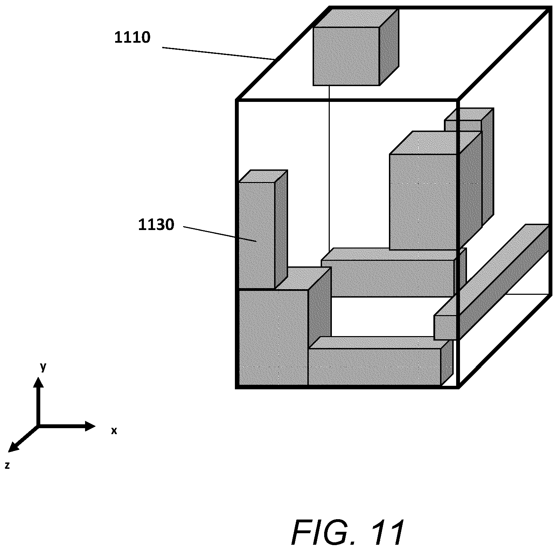

FIG. 11 shows an example of occupied sub-volumes. More specifically, FIG. 11 shows an example of occupied sub-volumes obtained from a KD-tree. A KD-tree is a different spatial-partitioning tree (e.g., occupancy tree) from those shown in FIGS. 10A and 10B.

A volume 1110 may encompass a point cloud (e.g., point cloud geometry). The volume 1110 may be partitioned into non-overlapping sub-volumes. The volume 1110 may be partitioned into non-overlapping sub-volumes, for example, based on (e.g., according to) the KD-tree. For example, each cuboid may be split into two sub-cuboids. FIG. 11 shows occupied sub-volumes 1130. The occupied sub-volumes 1130 may correspond to occupied nodes of the KD tree. Each occupied sub-volume 1130 may contain at least one point of the point cloud geometry.

As described herein with respect to FIG. 10A-10B, a spatial-partitioning tree for coding sub-volumes may be different in type and/or size from an occupancy tree for coding TriSoup nodes. FIG. 11 shows a KD-tree for coding the sub-volumes. TriSoup nodes may be coded (e.g., represented), for example, by an occupancy octree.

As described herein, a method for encoding a point cloud may comprise selecting a model, from a plurality of models, to represent the geometry of a portion of the point cloud contained in a sub-volume of a volume encompassing the point cloud. Model information indicating the model may be encoded in a bitstream. Geometry information corresponding to the geometry of the portion of the point cloud may be encoded in the bitstream. Geometry information corresponding to the geometry of the portion of the point cloud may be encoded in the bitstream, for example, based on the model.

As described herein, a method for decoding a point cloud may comprise decoding, from a bitstream, model information indicating a model, from a plurality of models, to represent the geometry of a portion of a point cloud contained in a sub-volume of a volume encompassing the point cloud. Geometry information corresponding to the geometry of the portion of the point cloud may be decoded from the bitstream. Geometry information corresponding to the geometry of the portion of the point cloud may be decoded from the bitstream, for example, based on the model.

The model may be selected from a list of at least two candidate models. For example, the at least two candidate models may comprise a triangle-based model such as a TriSoup model (e.g., as shown in FIGS. 7 and 8A-8C). The at least two candidate models may comprise a tree-based model. The tree-based model may use a space partitioning tree such as an occupancy octree (e.g., as shown in FIGS. 10A-10B and 11).

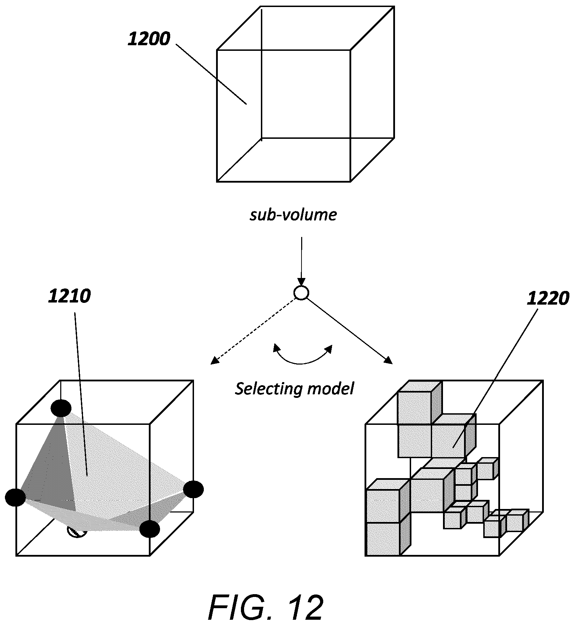

FIG. 12 shows an example selection of a model. More specifically, FIG. 12 shows an example selection of a model for the geometry of a portion of a point cloud contained in a sub-volume 1200. For example, the model to code (or represent) the geometry of the portion of the point cloud contained in the sub-volume 1200 may be selected between a triangle-based model 1210 and a tree-based model 1220. The triangle-based model 1210 may be, for example, a TriSoup model. In the tree-based model 1220, each occupied sub-cuboid may have a volume corresponding to at least one voxel.

The geometry of the portion of the point cloud contained in the sub-volume 1200 may be approximated (or represented) by triangles. The geometry of the portion of the point cloud contained in the sub-volume 1200 may be approximated (or represented) by triangles, for example, if the selected model is the triangle-based model 1210. The geometry of the portion of the point cloud contained in the sub-volume 1200 may be approximated (or represented) by TriSoup triangles. The geometry of the portion of the point cloud contained in the sub-volume 1200 may be approximated (or represented) by TriSoup triangles, for example, if the triangle-based model is a TriSoup model. Vertices of the TriSoup triangles may belong to edges of the sub-volume 1200.

The geometry of the portion of the point cloud contained in the sub-volume 1200 may be represented by occupied leaf nodes of a space-partitioning tree. The geometry of the portion of the point cloud contained in the sub-volume 1200 may be represented by occupied leaf nodes of a space-partitioning tree, for example, if the selected model is the tree-based model 1220. Root node of the space-partitioning tree may be the sub-volume. Each occupied leaf node may indicate (e.g., lead to) a point of the portion of the point cloud contained in the sub-volume 1200. The location of a point of the portion of the point cloud may be represented, for example, by the center position of a sub-volume associated with the occupied leaf node of the space-partitioning tree. The space-partitioning tree may be an occupancy binary tree, an occupancy quadtree, an occupancy octree, and/or any other space-partitioning (or spatial-partitioning) tree splitting a parent node to a predetermined number/quantity of child nodes.

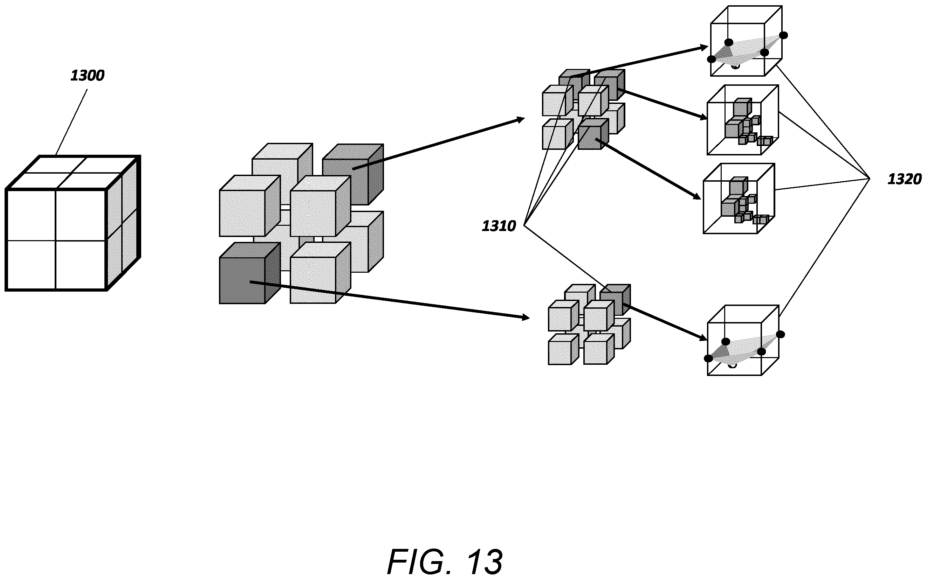

FIG. 13 shows an example selection of a model to code a portion of a point cloud geometry. More specifically, FIG. 13 shows an example selection of a model to code (e.g., encode and decode) a portion of the geometry of a point cloud contained in a volume 1300. For example, volume 1300 may be spatially partitioned using an occupancy tree. Occupied leaf nodes of the occupancy tree may be associated with sub-volumes 1310. The volume 1300 may be recursively spatially partitioned using the occupancy tree up to a depth level. The volume 1300 may be recursively spatially partitioned using the occupancy tree up to a depth level, for example, a predetermined depth level or a depth level indicated in the bitstream. Additionally or alternatively, the volume 1300 may be recursively spatially partitioned using the occupancy tree until a recursively split sub-volume contains only one point. The volume 1300 may be recursively spatially partitioned, for example, using the occupancy tree up to a depth level and/or until a recursively split sub-volume contains only one point, whichever occurs first. In the example volume 1300 shown in FIG. 13, sub-volumes 1310 may correspond to a depth level of two. The depth level of two may represent the volume 1300 being recursively partitioned twice. For example, the depth level of two may be a maximum or predetermined depth level.

A model 1320 may be selected for each sub-volume 1310. For example, the model 1320 of the geometry of a portion of the point cloud contained in a sub-volume 1310 may be selected between a triangle-based model and a tree-based model. The overall model of the geometry of the point cloud may be a combination of the models selected for the sub-volumes 1310 in addition to an occupancy tree used to spatially partition the volume 1300. The sub-volumes 1310 may be associated with the occupied leaf nodes of the occupancy tree. Two adjacent sub-volumes 1310 may be associated with different models 1320. One of the two adjacent sub-volumes may contain, for example, the geometry of a portion of the point cloud represented by a tree-based model. The other one of the two adjacent sub-volumes may contain, for example, the geometry of a portion of the point cloud represented by a triangle-based model.

A model for a sub-volume may be selected from a list of at least two candidate models (CMi). A model for a sub-volume may be selected from the list of at least two candidate models (CMi), for example, based on a Rate-Distortion Optimization (RDO) cost (or metric).

An RDO cost (e.g., Ci) may be determined (e.g., calculated, obtained). An RDO cost (e.g., Ci) may be determined (e.g., calculated, obtained), for example, based on encoding the geometry of the portion of the point cloud contained in the sub-volume. An RDO cost Ci (e.g., for an i-th model) may be determined (e.g., calculated, obtained), for example, by encoding the geometry of the portion of the point cloud contained in the sub-volume with each model CMi indicated by an index i of the list of at least two candidate models CMi. The RDO cost (e.g., Ci) may be determined, for example, based on (e.g., a combination of) distortion (e.g., Di), bitrate (e.g., Ri), and a parameter $\lambda$. A typical example of the combination for determining the RDO cost may be Di + $\lambda$ Ri. The distortion Di may be determined (e.g., calculated). The distortion Di may be determined (e.g., calculated) by comparing a decoded geometry of the portion of the point cloud encoded by using the candidate model CMi with the (reference/original/input) geometry of the portion of the point cloud contained in the sub-volume (that is to be encoded). The bitrate Ri may be determined (e.g., calculated), for example, as the bitrate used to signal the geometry of the portion of the point cloud encoded by using the candidate model CMi. The parameter $\lambda$ is a Lagrange parameter. The value of the parameter $\lambda$ may be (e.g., typically) set by the user. The value of the parameter $\lambda$ may tune the balance between quality and bitrate. Lower values of $\lambda$ may favor high quality and high bitrate. Higher values of $\lambda$ may favor low quality and low bitrate. The optimal trade-off quality vs (versus) bitrate may be obtained, for example, for a given Lagrange parameter $\lambda$. The optimal trade-off quality vs (versus) bitrate may be obtained, for example, by minimizing the RDO cost Ci as a function of coding parameters.

A candidate model may be a tree-based model. Coding parameters may be the size of the leaf nodes, a maximum depth level, or a combination thereof.

A candidate model may be a TriSoup model. Coding parameters may include, for example, edge length L of the triangles of the set of triangles of the TriSoup model and/or the quantization step $\Delta Q$ of the position of the (TriSoup) triangle vertices. Tthe quantization step $\Delta Q$ may be used for quantizing the positions of TriSoup vertices along TriSoup edges and for quantizing the scalar residual values ($\alpha_{res}$) of refined centroid vertices (C+$C_{res}$).

The selection of the model may be, for example, based on classifying the geometry of the portion of the point cloud (or point cloud portion) contained in the sub-volume. For example, the geometry in the point cloud portion may be classified as being a surface or a non-surface. A surface may correspond to a dense portion of the point cloud. A non-surface may correspond to a non-dense (e.g., sparse, "shaky") portion of the point cloud. A triangle-based model may be selected for coding (e.g., representing or modeling) the sub-volume, for example, if (e.g., based on) the geometry in the portion of the point cloud is classified as being a surface. A tree-based model may be selected for coding (e.g., representing or modeling) the sub-volume, for example, if (e.g., based on) the geometry in the portion of the point cloud is classified as being a non-surface.

The geometry of the portion of the point cloud contained in the sub-volume may be classified, for example, based on a number/quantity (e.g., NP) of points of the point cloud contained in the sub-volume. The geometry of the portion of the point cloud contained in the sub-volume may be classified as being a surface or a non-surface, for example, based on the number (e.g., NP) of points of the point cloud contained in the sub-volume and a length L of an edge of the sub-volume. The geometry of the portion of the point cloud contained in the sub-volume may be classified as being a surface or a non-surface, for example, based on whether an absolute difference (e.g., AD) between the number/quantity (e.g., NP) of points of the point cloud contained in the sub-volume and the square of the length L of the sub-volume edge is lower than a threshold T (e.g., AD=$|$NP-L$^2|$ < T). The geometry of the point cloud portion may be classified as being a surface, for example, based on the absolute difference AD being below (or equal to) the threshold T.

In some examples, the absolute difference AD may be lower than a threshold T ($|$NP-L$^2|$ < T) with most of the points of the point cloud in the sub-volume being located in a corner of the sub-volume. In these examples, the points of the point cloud may not be efficiently coded by a triangle-based model and may be better represented and coded using a tree-based model.

The geometry of the portion of the point cloud contained in the sub-volume may be classified as being a surface, for example, based on (e.g., further based on) the average number/quantity (AVG) of children per parent node of a tree of the tree-based model used to represent the geometry of the portion of the point cloud. The geometry of the portion of the point cloud contained in the sub-volume may be classified as being a surface, for example, if the average number (AVG) of children may fulfill (or satisfy) a condition. The geometry of the portion of the point cloud contained in the sub-volume may be classified as being a surface, for example, if the absolute difference AD is lower than (or equal to) a threshold T and the average number/quantity AVG fulfills the condition. The geometry of the portion of the point cloud contained in the sub-volume may be classified as being a non-surface, for example, if the absolute difference AD is greater than or equal to the threshold T and/or the condition is not fulfilled. The condition may be determined as fulfilled, for example, based on comparing the average number/quantity AVG of children per parent node with a threshold (e.g., a value based on a type of the tree). For example, the condition may be fulfilled, for example, if the average number/quantity AVG is less than (or equal) to the threshold. For example, if/when the tree is an octree, the condition may be fulfilled, for example, based on: the average number/quantity AVG of children per parent node being equal to 4 (four); or the dimension of the octree, calculated as log2(AVG), being equal to 2 (two).

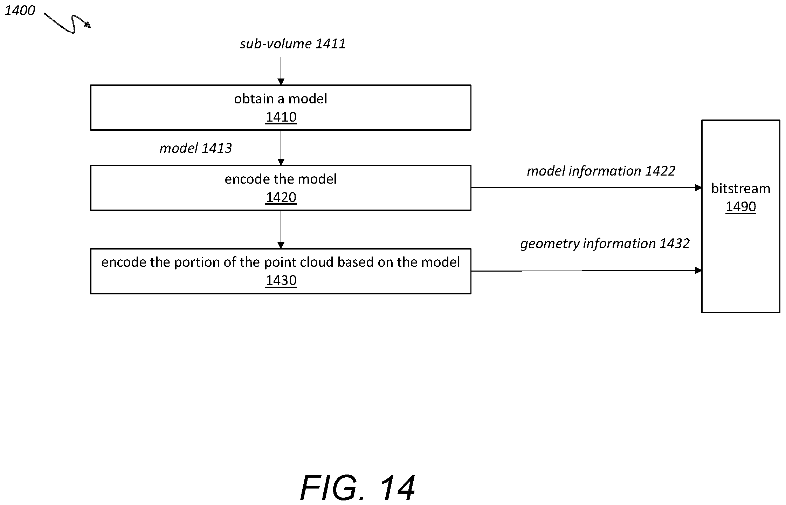

FIG. 14 shows an example method for encoding the geometry of a portion of a point cloud contained in a sub-volume. More specifically, FIG. 14 shows an example process 1400 of an example method for encoding the geometry of a portion of a point cloud contained in a sub-volume 1411 of a volume encompassing a point cloud. One or more steps of the example method may be performed and/or implemented by an encoder (e.g., encoder 114 of FIG. 1), an example computer system 2400 as described herein with respect to FIG. 24, and/or an example computing device 2530 as described herein with respect to FIG. 25. In some examples, steps 1410, 1420, and 1430 may represent components within the encoder. One or more steps (e.g., blocks) of the example method of FIG. 14 may be omitted, performed in other orders, and/or otherwise modified and/or one or more additional steps may be added.

At step 1410, a model 1413 may be obtained (e.g., determined, selected). A model 1413 may be obtained (e.g., selected, determined), for example, to represent the geometry of a portion of the point cloud contained in a sub-volume of the volume.

At step 1420, model information 1422 indicating the model 1413 may be encoded. Model information 1422 indicating the model 1413 may be encoded, for example, in the bitstream 1490.

At step 1430, geometry information 1432 representing the geometry of the portion of the point cloud contained in the sub-volume 1411 may be encoded. Geometry information 1432 representing the geometry of the portion of the point cloud contained in the sub-volume 1411 may be encoded, for example, in the bitstream 1490. Geometry information 1432 representing the geometry of the portion of the point cloud contained in the sub-volume 1411 may be encoded, for example, based on the model 1413.

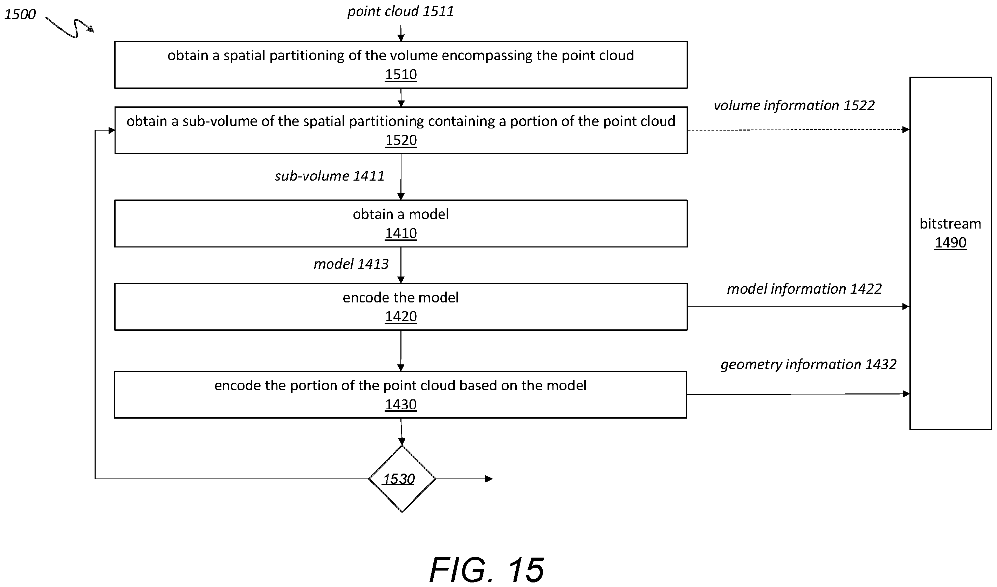

FIG. 15 shows an example method for encoding the geometry of a point cloud. More specifically, FIG. 15 shows a process 1500 of an example method for encoding the geometry of a point cloud. One or more steps of the example method may be performed and/or implemented by an encoder (e.g., encoder 114 of FIG. 1), an example computer system 2400 as described herein with respect to FIG. 24, and/or an example computing device 2530 as described herein with respect FIG. 25. In some examples, steps 1510 and 1520 may represent components within the encoder. One or more steps (e.g., blocks) of the example method of FIG. 15 may be omitted, performed in other orders, and/or otherwise modified and/or one or more additional steps may be added.

At step 1510, a spatial partitioning of the volume encompassing the point cloud 1511 may be performed. A set of sub-volumes may be obtained. A set of sub-volumes may be obtained, for example, from iteratively spatially partitioning the volume encompassing the point cloud 1511. The set of sub-volumes may comprise sub-volumes corresponding to leaf nodes of an occupancy tree used to spatially partition the volume encompassing the point cloud 1511. The set of sub-volumes may be non-overlapping. Each sub-volume may comprise at least one point of the point cloud 1511. For example, each sub-volume may be activated or occupied by a portion of the point cloud 1511.

At step 1520, a sub-volume 1411 of the set of sub-volumes may be obtained (e.g., considered, determined). The sub-volume 1411 may be obtained from the spatial partitioning as described herein with respect to step 1510. The sub-volume 1411 may contain a portion of the point cloud 1511.

Volume information 1522 may be encoded in the bitstream 1490. The volume information may indicate the sub-volume 1411 of the spatial partitioning of the volume encompassing the point cloud 1511.

Steps 1410, 1420, and 1430 may follow step 1520 and have been described herein with respect to FIG. 14. Steps 1520, 1410, 1420, and 1430 may iterate until all sub-volumes of the set of sub-volumes have been obtained (e.g., considered, determined). At step 1530, a determination may be made as to whether all sub-volumes of the set of sub-volumes have been obtained (e.g., considered, determined). If not all sub-volumes of the set of sub-volumes have been obtained (e.g., considered, determined), the process may return to step 1520, for example, to obtain another (e.g., a next) sub-volume. If all sub-volumes of the set of sub-volumes have been obtained (e.g., considered, determined), the iteration may be concluded.

The model information 1422 may indicate respective models for the sub-volumes. Each of the models may be selected from a plurality of models. Each of the models may be used to represent (and code) geometry of a portion of a point cloud contained in a respective sub-volume of the sub-volumes. In some examples, at step 1420, the model information 1422 may be encoded in the bitstream 1490. The model information 1422 may be encoded in the bitstream 1490, for example, based on a predictor of the model information 1422.

Coding model information 1422 of a selected model for each sub-volume of the volume may cause (e.g., induce, lead to, etc.) an increase in bitrate. The increase in bitrate may reduce the overall compression performance. The increase in bitrate may reduce the overall compression performance, for example, if the sub-volumes are small and/or the set of models is large. Extra bitrate for encoding the part of the model information 1422 related to each sub-volume may be reduced. Extra bitrate for encoding the part of the model information 1422 related to each sub-volume may be reduced, for example, if the model information 1422 is encoded by using a predictor of the model information 1422.

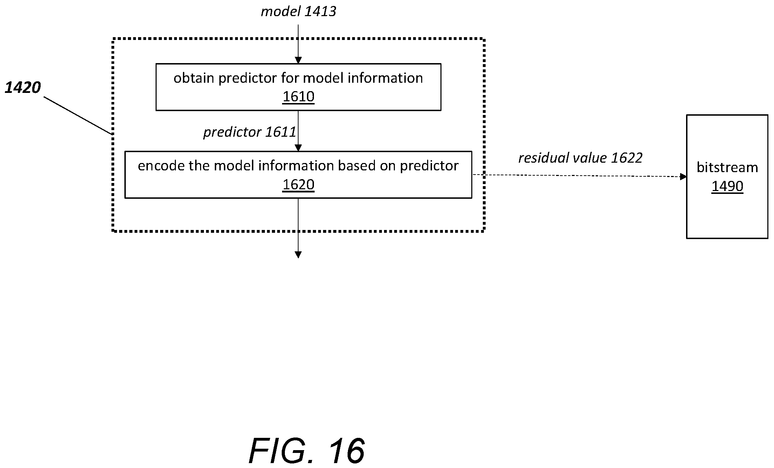

FIG. 16 shows example details of step 1420 (i.e., encoding a model) as described herein with respect to FIG. 14.

More specifically, FIG. 16 shows example substeps of step 1420. The example substeps may be associated with encoding of the model information 1422 based on a predictor 1611 of the model information 1422.

At step 1610, a predictor 1611 of/for the model information 1422 indicating model 1413 may be obtained (e.g., determined computed, selected). Prediction information may be encoded in a bitstream. The prediction information may indicate a type of the predictor 1611 of the model information 1422 selected among a set of predictor types. For example, a type of the predictor 1611 of the model information 1422 may indicate that the predictor 1611 is based on at least one model determined for at least one neighboring sub-volume of the sub-volume.

At step 1620, the model information 1422 may be encoded. The model information 1422 may be encoded, for example, in the bitstream 1490. The model information 1422 may be encoded, for example, based on the predictor 1611 of the model information 1422.

The model information 1422 may comprise a residual value 1622 associated with an indication of the model. Encoding the model information 1422 may comprise obtaining the residual value 1622. Encoding the model information 1422 may comprise: obtaining the residual value 1622, for example, based on the model information 1422 and the predictor 1611 of the model information 1422; and encoding the residual value 1622, for example, in the bitstream 1490. The encoder may obtain the residual value 1622 as predictor 1611 minus the model information 1422. Alternatively, the residual value 1622 may be obtained (e.g., computed, determined, selected) as the model information 1422 minus the predictor 1611. At the decoder, the decoder may perform an inverse process to reconstruct the model information 1422. For example, the decoder may reconstruct or determine model information 1422 as the predictor 1611 minus the residual value 1622. The decoder may reconstruct or determine model information 1422 as the predictor 1611 minus the residual value 1622, for example, if the encoder encodes the residual value 1622 as predictor 1611 minus the model information 1422. The decoder may reconstruct or determine model information 1422 as the combination (or addition) of predictor 1611 and the residual value 1622, for example, if the encoder encodes the residual value 1622 as the model information 1422 minus the predictor 1611.

The encoding of the residual value 1622 of the model information 1422 (e.g., in the bitstream 1490) may comprise entropy encoding the residual value 1622. The residual value 1622 may be encoded as a binary codeword. Each binary symbol of the binary codeword may be entropy encoded, for example, in the bitstream 1490, by a binary entropy encoder. For example, the binary entropy coder may be a context-adaptive binary arithmetic coder (CABAC) using a context selected, from a plurality of contexts. The context-adaptive binary arithmetic coder (CABAC) may use a context selected, from a plurality of contexts, for example, based on the predictor 1611 of the model information 1422 for entropy encoding the binary symbols.

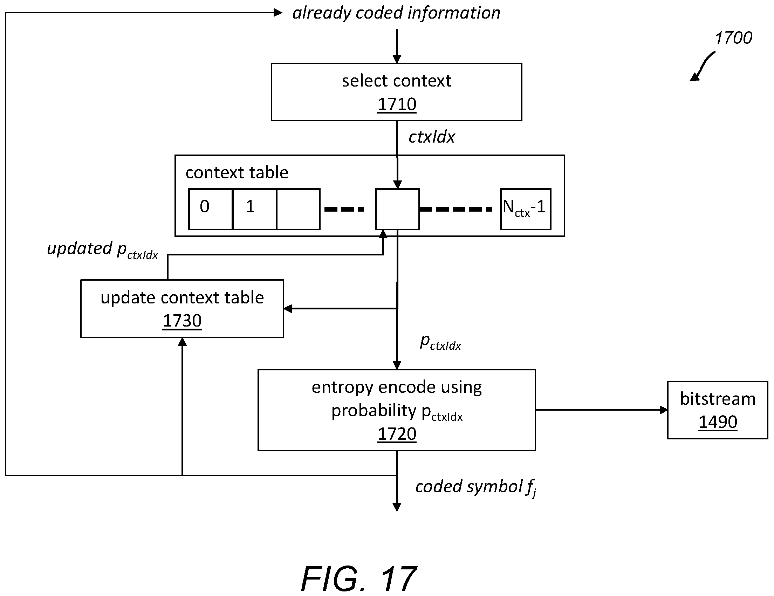

FIG. 17 shows an example method 1700 performed by a context-adaptive arithmetic encoder. At step 1710, a context may be selected. A context may be selected, for example, based on already coded information. A context may be selected, for example, to provide a context index (e.g., ctxIdx) associated with each binary data or binary symbol (e.g., $f_j$) of the residual value 1622. A context table with a quantity of (e.g., $N_{ctx}$) entries may store the probabilities associated with the contexts. At step 1720, a probability (e.g., $p_{ctxIdx}$) may be obtained (e.g., as the ctxIdx -th entry of the context table), and a binary symbol (e.g., $f_j$) of the residual value 1622 may be encoded (e.g., entropy encoded). The binary symbol (e.g., $f_j$) of the residual value 1622 may be encoded (e.g., entropy encoded), for example, in the bitstream 1490. The binary symbol (e.g., $f_j$) of the residual value 1622 may be encoded, for example, by an entropy coder, using the probability (e.g., $p_{ctxIdx}$). Entropy coders may be arithmetic coders, and/or may be any other type of entropy coders such as asymmetric numeral coders. For example, (e.g., optimal) coders may add $-\log2(p_{ctxIdx})$ bits in the bitstream to encode $f_j=1$ or $-\log2(1- p_{ctxIdx})$ bits in the bitstream to encode $f_j=0$.

At step 1730, the context table may be updated. The probability (e.g., $p_{ctxIdx}$) of the context table may be updated. The probability (e.g., $p_{ctxIdx}$) of the context table may be updated, for example, based on the coded symbol (e.g., $f_j$) and the probability (e.g., $p_{ctxIdx}$). The update process may be (e.g., usually) performed by using update tables. The updated probability may replace an entry (e.g., the ctxIdx-th entry) of the context table. Subsequently, another symbol may be encoded, and so on. The update may loop back to the context table. This looping back may cause a bottleneck in the coding workflow, as another symbol may be encoded, for example, only after the update has been performed. Frequent or quick memory access to the context table may be needed, and minimizing the size of the context table may help easing burden on the hardware (e.g., memory).

A Context-Adaptive Binary Arithmetic decoder may perform essentially the same operations as the Context-Adaptive Binary Arithmetic encoder except that the coded symbol (e.g., $f_j$) may be decoded from the bitstream by a decoder (e.g., an entropy decoder) using the probability (e.g., $p_{ctxIdx}$). The choice of (e.g., adequate) context may significantly impact whether good compression can be obtained. An example of an adequate context may be the probability (e.g., $p_{ctxIdx}$) that estimates the best chance of the binary data (e.g., $f_j$) being equal to a value (e.g., 1). The context selection may use relevant already coded information and correlation to obtain this adequate context.

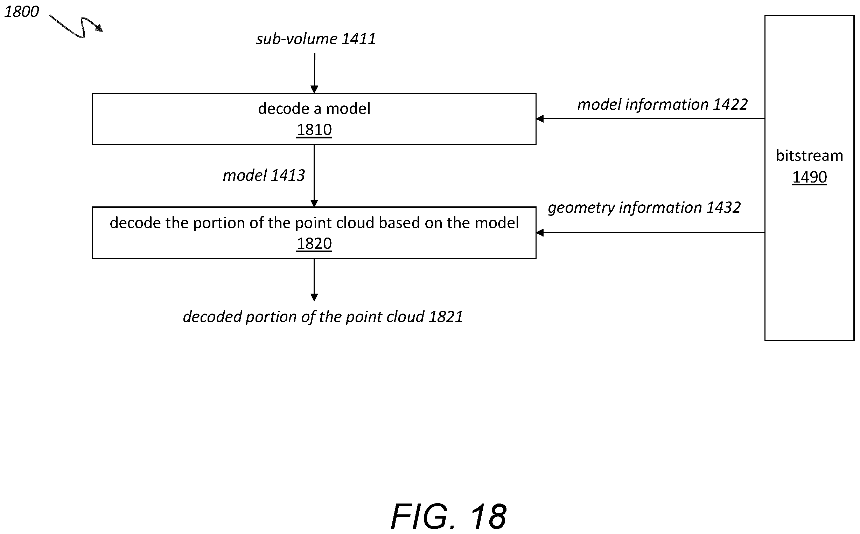

FIG. 18 shows an example method for decoding the geometry of a portion of a point cloud. More specifically, FIG. 18 shows an example process 1800 of a method for decoding the geometry of a portion of a point cloud contained in a sub-volume 1411 of a volume encompassing a point cloud. One or more steps of the example method may be performed and/or implemented by a decoder (e.g., decoder 120 of FIG. 1), an example computer system 2400 as described herein with respect to FIG. 24, and/or an example computing device 2530 as described herein with respect to FIG. 25. In some examples, steps 1810 and 1820 may represent components within the decoder. One or more steps (e.g., blocks) of the example method of FIG. 18 may be omitted, performed in other orders, and/or otherwise modified and/or one or more additional steps may be added.

At step 1810, a model may be decoded. Model information 1422 may be decoded from the bitstream 1490. The model information 1422 may indicate a model 1413, from a plurality of models, to represent a geometry of a portion of a point cloud in the sub-volume 1411 of the volume encompassing a point cloud.

At step 1820, the portion of the point cloud may be decoded. Geometry information 1432 corresponding to the geometry of the portion of the point cloud may be decoded from the bitstream 1490. Geometry information 1432 corresponding to the geometry of the portion of the point cloud may be decoded from the bitstream 1490, for example, based on the model 1413. The decoded portion of the point cloud 1821 in the sub-volume 1411 may be obtained, for example, based on the decoded geometry information 1432.

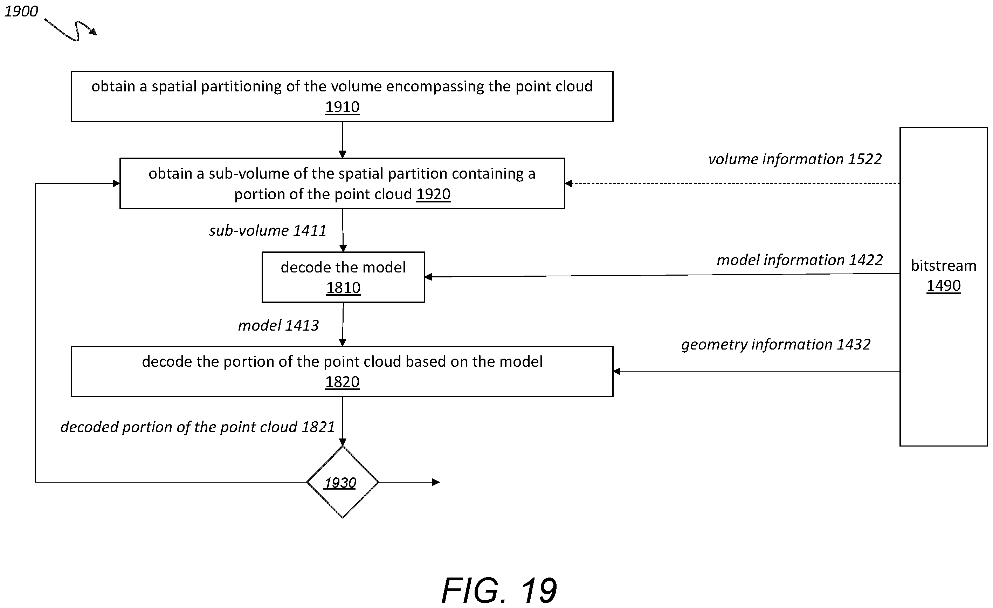

FIG. 19 shows an example method for decoding the geometry of a point cloud. More specifically, FIG. 19 shows an example process 1900 of a method for decoding the geometry of a point cloud. One or more steps of the example method may be performed and/or implemented by a decoder (e.g., decoder 120 of FIG. 1), an example computer system 2400 as described herein with respect to FIG. 24, and/or an example computing device 2530 as described herein with respect to FIG. 25. In some examples, steps 1910 and 1920 may represent components within the decoder. One or more steps (e.g., blocks) of the example method of FIG. 19 may be omitted, performed in other orders, and/or otherwise modified and/or one or more additional steps may be added.

At step 1910, a spatial partitioning of the volume encompassing the point cloud may be performed or obtained. A set of sub-volumes may be obtained. A set of sub-volumes may be obtained, for example, from iteratively spatially partitioning the volume encompassing the point cloud. The set of sub-volumes may comprise sub-volumes corresponding to leaf nodes of an occupancy tree used to spatially partition the volume encompassing the point cloud. The set of sub-volumes may be non-overlapping. Each sub-volume may comprise at least one point of the point cloud. For example, each sub-volume may be activated or occupied by a portion of the point cloud.

At step 1920, a sub-volume 1411 of the set of sub-volumes may be obtained (e.g., considered, determined). The sub-volume 1411 may be obtained from the spatial partitioning at step 1910. The sub-volume 1411 may contain a portion of the point cloud.

Steps 1810 and 1820 may follow step 1920 and have been described herein with respect to FIG. 18. Steps 1810, 1820, and 1920 may iterate until all sub-volumes of the set of sub-volumes may be obtained (e.g., considered). At step 1930, a determination may be made as to whether all sub-volumes of the set of sub-volumes have been obtained (e.g., considered, determined). If not all sub-volumes of the set of sub-volumes have been obtained (e.g., considered, determined), the process may return to step 1920, for example, to obtain another (e.g., a next) sub-volume. If all sub-volumes of the set of sub-volumes have been obtained (e.g., considered, determined), the iteration may be concluded.

The model information 1422 may indicate respective models for the sub-volumes. Each of the models may be selected from a plurality of models. Each of the models may be used to represent geometry of a portion of a point cloud contained in a respective sub-volume of the sub-volumes. In some examples, at step 1810, the model information 1422 may be decoded from the bitstream 1490. The model information 1422 may be decoded from the bitstream 1490, for example, based on a predictor 1611 of the model information 1422.

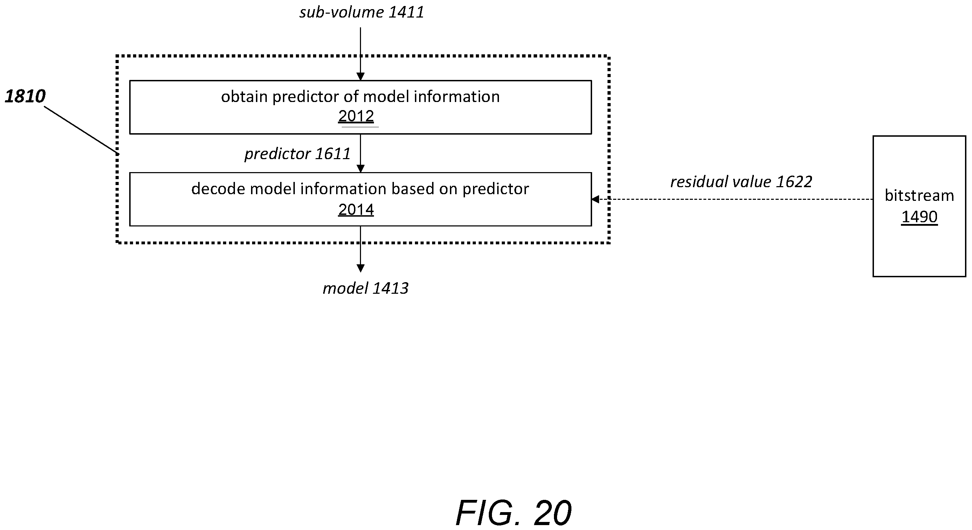

FIG. 20 shows example details of step 1810 (i.e., decoding a model) as described herein with respect to FIG. 18. More specifically, FIG. 20 shows example substeps of step 1810. The example substeps may be associated with decoding of the model information 1422 based on a predictor 1611 of the model information 1422.

At step 2012, the predictor 1611 of the model information 1422 may be obtained (e.g., determined). Prediction information may be decoded from the bitstream 1490. Prediction information may indicate a type of the predictor 1611 of the model information 1422 selected among a set of predictor types.

At step 2014, the model information 1422 may be decoded. The model information 1422 may be decoded, for example, from the bitstream 1490. The model information 1422 may be decoded, for example, based on the predictor 1611 of the model information 1422.

The model information 1422 may comprise a residual value 1622 associated with an indication of the model. Decoding the model information 1422 from the bitstream may comprise: decoding the residual value 1622, for example, from the bitstream 1490; and selecting the model, from the plurality of models, for example, based on the residual value 1622 and the predictor 1611 of the model information 1422. The decoder may reconstruct or determine model information 1422, for example, as the predictor 1611 minus the residual value 1622. The decoder may reconstruct or determine model information 1422 as the predictor 1611 minus the residual value 1622, for example, if the encoder encodes the residual value 1622 as predictor 1611 minus the model information 1422. The decoder may reconstruct or determine model information 1422 as the combination (or addition) of predictor 1611 and the residual value 1622, for example, if the encoder encodes the residual value 1622 as the model information 1422 minus the predictor 1611.

The decoding of the residual value of the model information 1422 (e.g., from the bitstream 1490) may comprise entropy decoding the residual value 1622. The residual value 1622 of the model information 1422 may be obtained from a binary codeword. Each binary symbol of the binary codeword may be entropy decoded, for example, from the bitstream 1490, by a binary entropy decoder. The binary entropy decoder may be a context-adaptive binary arithmetic coder (CABAC) as described herein with respect to FIG. 17. The binary entropy decoder may be a context-adaptive binary arithmetic coder (CABAC) using a context selected, from a plurality of contexts, for example, based on the predictor 1611.

Volume information 1522 may indicate the sub-volume 1411 of the spatial partitioning. The volume information 1522 may be decoded from the bitstream 1490. The volume information 1522 may indicate at least one dimension or a size of the sub-volumes. The volume information 1522 may indicate at least one shape of the sub-volumes. The at least one shape may be a cuboid. The size of the cuboid may correspond to a product of a first integer number/quantity (e.g., $N_x$) of occupied leaf nodes along a first direction, a second integer number/quantity (e.g., $N_y$) of occupied leaf nodes along a second direction, and a third integer number/quantity (e.g., $N_z$) of occupied leaf nodes along a third direction. The first, second, and third integer numbers (or values, quantities) may be each equal to a fourth integer number/value/quantity N. For example, the sub-volume may be a cube of NxNxN occupied leaf nodes. The volume information 1522 may indicate the first, second, and third integer numbers/values/quantities or the fourth integer number/value/quantity.

The volume information 1522 may indicate that one sub-volume of the set of sub-volumes is associated with at least one non-leaf node of an occupancy tree located at a tree level (e.g., $L_{qual}$) of the occupancy tree. Sub-volumes may be cuboids corresponding to leaf nodes (e.g., $2^{nx} * 2^{ny} * 2^{nz}$ leaf nodes). For example, sub-volumes may be cubes corresponding to $2^n * 2^n * 2^n$ leaf nodes, for example, if the occupancy tree is an octree. The volume information 1522 may indicate that one occupied sub-volume may correspond to at least one or at least a part of one occupied non-leaf node of an occupancy tree located at some tree level of the occupancy tree. The volume information 1522 may indicate that the sub-volume may correspond to one non-leaf node of an occupancy octree. The volume information 1522 may indicate that one sub-volume may correspond to a set of occupied non-leaf nodes of the occupancy octree. The set of non-leaf nodes associated with the sub-volume may define a cuboid.

The volume information 1522 may indicate a tree level (e.g., $L_{qual}$). The sub-volume may be associated with at least one non-leaf node at the tree level. The volume information 1522 may indicate that the sub-volume may be associated with at least one node at a deeper level. Occupied sub-volumes might not all be (e.g., exactly) at the tree level (e.g., $L_{qual}$). Occupied sub-volumes may correspond to tree nodes located at tree levels deeper than the tree level (e.g., $L_{qual}$). The volume information 1522 may indicate that each of the at least one non-leaf node at the tree level may be associated with a tree of further sub-volumes.

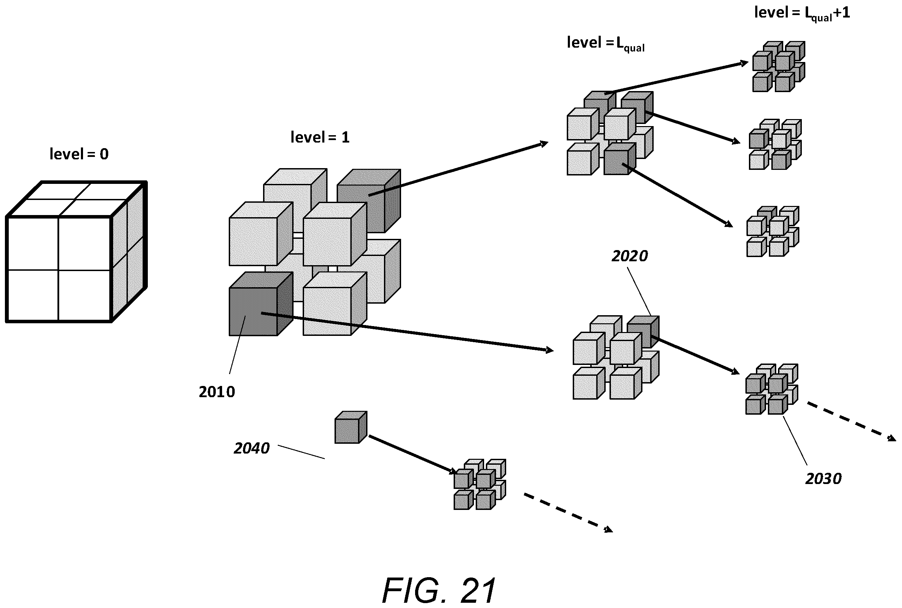

FIG. 21 shows an example of an occupied sub-volume corresponding to occupied non-leaf nodes. More specifically, FIG. 21 shows an example of an occupied sub-volume corresponding to occupied non-leaf nodes at a tree level (e.g., $L_{qual}$) of an occupancy tree and corresponding to occupied non-leaf nodes at a deeper tree level (e.g., $L_{qual}+1$).

The occupancy tree may be an octree. The octree may comprise a root node associated with a cuboid (e.g., cube) that may be split into eight sub-cuboids (e.g., sub-cubes) at level 0. At level 1, a sub-cuboid (e.g., sub-cube) 2010 may be split into eight sub-cuboids (e.g., sub-cubes) at level 2 (e.g., $L_{qual}$). One of the eight sub-cuboids (e.g., sub-cubes) at level 2 may correspond to an occupied non-leaf node of the occupancy octree, and may be referred to as a largest further sub-volume 2020. The largest further sub-volume 2020 may be further split into eight further sub-cuboids (e.g., sub-cubes) 2030 corresponding to non-leaf nodes at level 3 (e.g., $L_{qual}+1$). The volume information 1522 may indicate the largest further sub-volume 2020 and further sub-cuboids (e.g., sub-cubes) 2030 corresponding to non-leaf nodes at level 3 (e.g., $L_{qual}+1$). The volume information 1522 may indicate that the largest further sub-volume 2020 at level 2 (e.g., $L_{qual}$) may be associated with a root node of a tree of further sub-volumes 2040 containing smaller further sub-volumes, for example, based on the eight sub-cuboids (e.g., sub-cubes) 2030 at level 3 (e.g., $L_{qual}+1$) obtained by splitting the largest further sub-volume 2020 and possibly further sub-cuboids (e.g., sub-cubes) obtained by further splitting each of the eight further sub-cuboids (e.g., sub-cubes) 2030 at level 3 (e.g., $L_{qual}+1$).

The volume information 1522 may indicate a sub-volume split flag per non-leaf node at a tree level. The volume information 1522 may indicate a sub-volume split flag per non-leaf node at a tree level, for example, to indicate that a non-leaf node at the tree level is associated with a tree of further sub-volumes. The tree may comprise a non-leaf node at the tree level as largest further sub-volume, and smaller further sub-volumes, for example, based on non-leaf node at least one deeper level as child nodes.

Occupied further sub-volumes may be tree nodes having a sub-volume split flag set to false. The child nodes of these tree nodes may have no sub-volume split flag. Occupied child nodes of a tree node may have further sub-volume split flag signaling the continuation of the tree of further sub-volumes, for example, if the tree node has a sub-volume split flag set to true. The tree of further sub-volumes may be embedded into the occupancy octree, for example, by using the sub-volume split flags. The volume information 1522 may indicate the tree level (e.g., $L_{qual}$) corresponding to largest further sub-volume 2020.

As described herein, other types of occupancy trees or space-partitioning (or spatial-partitioning) trees may be used to indicate (and represent) the sub-volumes. For example, besides the occupancy octree, other types of spatial-partitioning trees such as a binary space partitioning (BSP) tree, a bounding hierarchy volume (BHV) tree, a k-dimensional (k-d) tree, a quadtree, etc., may be used.

The geometry of the portion of the point cloud contained in the sub-volume may be encoded as geometry information. The geometry of the portion of the point cloud contained in the sub-volume may be encoded as geometry information 1432, for example, in the bitstream (step 1430), based on the model 1413. The geometry information 1432 may depend on the model 1413. The model 1413 may be of any type of model. The model 1413 may be a TriSoup model as described herein with respect to FIGS. 7, 8A-8C. The geometry information 1432 may indicate TriSoup information associated with at least one TriSoup node. For example, the TriSoup information may represent TriSoup vertex presence flag of each TriSoup edge belonging to the TriSoup node. The TriSoup information may represent a position of a TriSoup vertex, if present, along a TriSoup edge of each TriSoup edge belonging to the TriSoup node. The model 1413 may be a tree-based model. The geometry information 1432 may indicate occupancy bits (e.g., as shown in FIG. 3) indicating the occupancy of nodes of a space-partitioning tree of the tree-based model. The geometry information 1432 may indicate at least one parameter of the space-partitioning tree of the tree-based model. The at least one parameter may be a minimum depth of the space-partitioning tree and/or a minimal size of a node of the space-partitioning tree.

The model information 1422 may indicate candidate models for representing geometries of portions of the point cloud. The model information 1422 may comprise an index of an ordered list of candidate models for representing geometries of portions of the point cloud. The index may be a binary codeword. The list of candidate models may comprise at least two candidate models. The index may indicate one of the at least two candidate models. The at least two candidate models may comprise a tree-based model. The tree-based model may be an occupancy tree-based model (e.g. an occupancy octree-based model). The tree-based model may comprise, for example, an occupancy tree. The occupancy tree may be based on a space-partitioning tree. The at least two candidate model may comprise a triangle-based model (e.g., a TriSoup model).

The predictor 1611 of the model information 1422 may be based on at least one model information. The predictor 1611 of the model information 1422 may be based on at least one model information determined for at least one neighboring sub-volume of the sub-volume. A neighboring sub-volume may be adjacent to the sub-volume. The neighboring sub-volume may be adjacent to the sub-volume, for example, based on the neighboring sub-volume sharing face, an edge, and/or a vertex with the sub-volume. The neighboring sub-volume may be indicated by an index of a list of ordered sub-volumes including both the sub-volume and the neighboring sub-volumes.

A list of ordered sub-volumes may be obtained from the space-partitioning tree. A list of ordered sub-volumes may be obtained from the space-partitioning tree, for example, if the spatial partitioning tree is a space-partitioning tree scanned in breath-first order and the nodes at a given depth are scanned according to a lexicographic order (e.g., in xyz, such as the Morton order as described herein with respect to FIG. 1). The information of the model 1413 determined for a current sub-volume of the list of ordered sub-volumes may be predicted. The information of the model 1413 determined for a current sub-volume of the list of ordered sub-volumes may be predicted, for example, based on information of models already selected for neighboring sub-volumes (e.g., for sub-volumes of the list of ordered sub-volumes having indices lower than the index of the current sub-volume). The list of ordered sub-volumes may comprise indications of respective models determined for respective ordered sub-volumes.

The predictor of the model information may be based on an average value of model information indicating models selected for the at least one neighboring sub-volume. The predictor of the model information may be determined (e.g., calculated, obtained), for example, by rounding the average value (e.g. rounding to the nearest integer, rounding down (floor), rounding up (ceiling)). The predictor of the model information may be determined by rounding the average value, for example, if the model information comprises an index. The predictor of the model information may be based on a median value of model information indicating models for at least one neighboring sub-volume. The predictor of the model information may be based on the most frequent model information among model information indicating models selected for at least one of the neighboring sub-volumes.

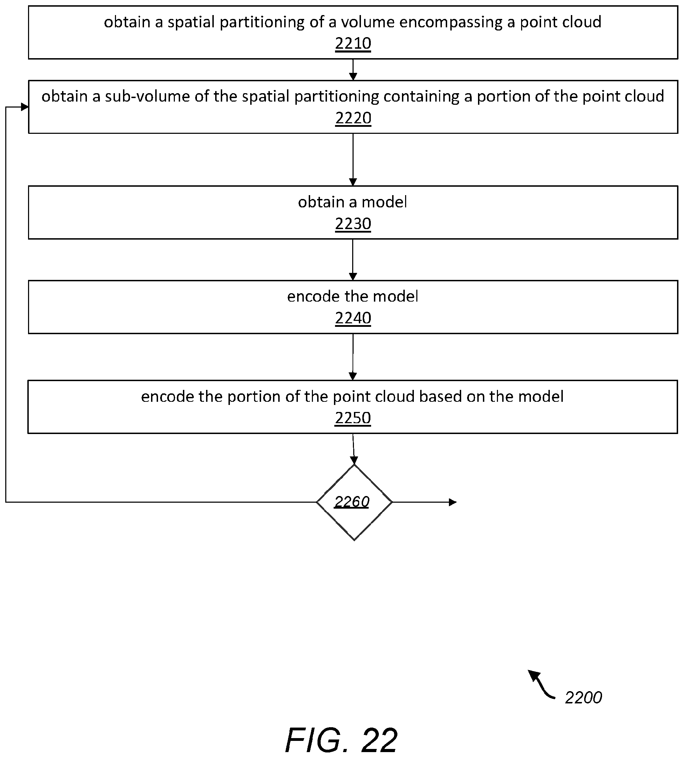

FIG. 22 shows an example method for encoding a point cloud geometry. More specifically, FIG. 22 shows a flowchart 2200 of an example method for encoding a point cloud geometry in a bitstream. One or more steps of the example method may be performed and/or implemented by an encoder (e.g., encoder 114 of FIG. 1), an example computer system 2400 as described herein with respect to FIG. 24, and/or an example computing device 2530 as described herein with respect to FIG. 25. One or more steps (e.g., blocks) of the example method of FIG. 22 may be omitted, performed in other orders, and/or otherwise modified and/or one or more additional steps may be added.

At step 2210, a spatial partitioning of a volume encompassing a point cloud may be performed. A set of sub-volumes may be obtained, for example, from iteratively spatially partitioning the volume encompassing the point cloud.

At step 2220, a sub-volume of the spatial partitioning containing a portion of the point cloud may be obtained. A current sub-volume of the set of sub-volumes may be determined (e.g., selected, considered or obtained).

At step 2230, a model may be obtained (e.g., selected, determined). A model may be selected to represent the geometry of a portion of the point cloud contained in the current sub-volume.

At step 2240, the model may be encoded. Model information indicating the model may be encoded in a bitstream.

At step 2250, the portion of the point cloud may be encoded based on the model. Geometry information representing the geometry of the portion of the point cloud contained the current sub-volume may be encoded. Geometry information representing the geometry of the portion of the point cloud contained the current sub-volume may be encoded, for example, in the bitstream, based on the model.

The example method of FIG. 22 may iterate. The example method may iterate, for example, until all the sub-volumes of the set of sub-volumes are considered or obtained. At step 2260, a determination may be made as to whether all sub-volumes of the set of sub-volumes have been obtained (e.g., considered, determined). If not all sub-volumes of the set of sub-volumes have been obtained (e.g., considered, determined), the process may return to step 2220, for example, to obtain another (e.g., a next) sub-volume. If all sub-volumes of the set of sub-volumes have been obtained (e.g., considered, determined), the iteration may be concluded.

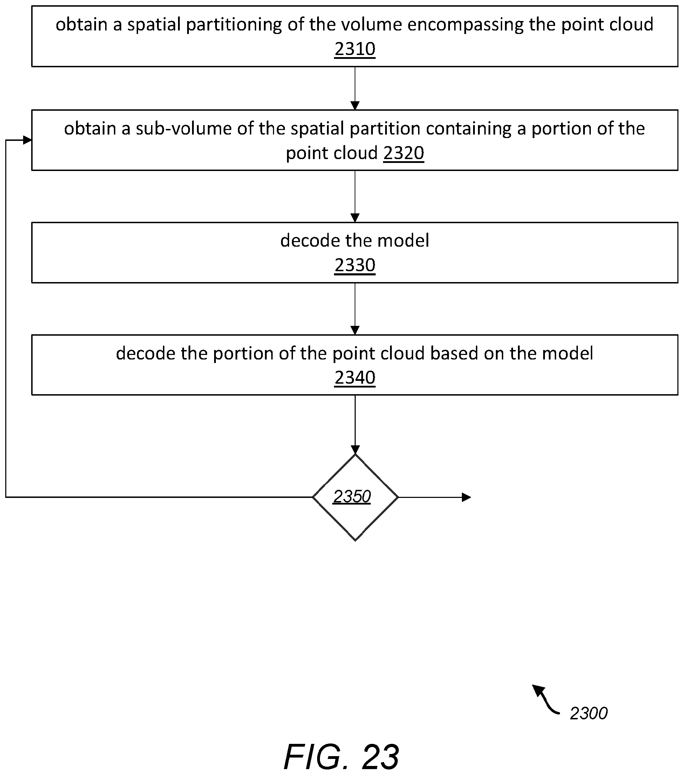

FIG. 23 shows an example method for decoding a point cloud geometry. FIG. 23 shows a flowchart 2300 of an example method for decoding a point cloud geometry from a bitstream. One or more steps of the example method may be performed and/or implemented by a decoder (e.g., decoder 120 of FIG. 1), an example computer system 2400 as described herein with respect to FIG. 24, and/or an example computing device 2530 as described herein with respect to FIG. 25. One or more steps (e.g., blocks) of the example method of FIG. 23 may be omitted, performed in other orders, and/or otherwise modified and/or one or more additional steps may be added.

At step 2310, a spatial partitioning of the volume encompassing the point cloud may be obtained or performed. A set of sub-volumes may be obtained. A set of sub-volumes may be obtained, for example, from iteratively spatially partitioning a volume encompassing a point cloud.

At step 2320, a sub-volume of the spatial partitioning containing a portion of the point cloud may be obtained. A current sub-volume of the set of sub-volumes may be determined (e.g., selected, obtained or considered).

At step 2330, a model may be decoded. Model information may be decoded from a bitstream. The model information may indicate a model, from a plurality of models, to represent a geometry of a portion of the point cloud in the current sub-volume.

At step 2340, the portion of the point cloud may be decoded based on the model. Geometry information corresponding to the geometry of the portion of the point cloud may be decoded. Geometry information corresponding to the geometry of the portion of the point cloud may be decoded, for example, from the bitstream, based on the model. The decoded portion of the point cloud in the current sub-volume may be obtained, for example, based on the decoded geometry information.

The example method may iterate. The example method may iterate, for example, until all the sub-volumes of the set of sub-volumes are considered or obtained. At step 2350, a determination may be made as to whether all sub-volumes of the set of sub-volumes have been obtained (e.g., considered, determined). If not all sub-volumes of the set of sub-volumes have been obtained (e.g., considered, determined), the process may return to step 2320, for example, to obtain another (e.g., a next) sub-volume. If all sub-volumes of the set of sub-volumes have been obtained (e.g., considered, determined), the iteration may be concluded.

FIG. 24 shows an example computer system in which examples of the present disclosure may be implemented. For example, the example computer system 2400 shown in FIG. 24 may implement one or more of the methods described herein. For example, various devices and/or systems described herein (e.g., in FIG. 1) may be implemented in the form of one or more computer systems 2400. Furthermore, each of the steps (e.g., blocks) of the flowcharts depicted in this disclosure (e.g., in FIGS. 6, 14-20, and 22-23) may be implemented on one or more computer systems 2400. When more than one computer system 2400 is used, the computer systems 2400 may be interconnected by one or more networks to form a cluster of computer systems that may act as a single pool of seamless resources. The interconnected computer systems 2400 may form a "cloud" of computers.

The computer system 2400 may comprise one or more processors, such as processor 2404. Processor 2404 may be a special purpose processor, a general purpose processor, a microprocessor, or a digital signal processor. The processor 2404 may be connected to a communication infrastructure 2402 (for example, a bus or network). The computer system 2400 may also comprise a main memory 2406 (e.g., a random access memory (RAM)), and/or a secondary memory 2408.

The secondary memory 2408 may comprise a hard disk drive 2410 and/or a removable storage drive 2412 (e.g., a magnetic tape drive, an optical disk drive, and/or the like). The removable storage drive 2412 may read from and/or write to a removable storage unit 2416. The removable storage unit 2416 may comprise a magnetic tape, optical disk, and/or the like. The removable storage unit 2416 may be read by and/or may be written to the removable storage drive 2412. The removable storage unit 2416 may comprise a computer usable storage medium having stored therein computer software and/or data.

The secondary memory 2408 may comprise other similar means for allowing computer programs or other instructions to be loaded into computer system 2400. Such means may include a removable storage unit 2418 and/or an interface 2414. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 2418 and interfaces 2414 which may allow software and/or data to be transferred from the removable storage unit 2418 to the computer system 2400.

The computer system 2400 may also comprise a communications interface 2420. The communications interface 2420 may allow software and data to be transferred between computer system 2400 and external devices. Examples of the communications interface 2420 may include a modem, a network interface (e.g., an Ethernet card), a communications port, etc. Software and/or data transferred via communications interface 2420 may be in the form of signals which may be electronic, electromagnetic, optical, and/or other signals capable of being received by the communications interface 2420. The signals may be provided to communications interface 2420 via a communications path 2422. The communications path 2422 may carry signals and may be implemented using wire or cable, fiber optics, a phone line, a cellular phone link, an RF link, and/or any other communications channel(s).

The computer system 2400 may also comprise one or more sensor(s) 2424. The sensor(s) 2424 may measure or detect one or more physical quantities and convert the measured or detected physical quantities into an electrical signal in digital and/or analog form. For example, the sensor(s) 2424 may include an eye tracking sensor to track the eye movement of a user. A display of a point cloud may be updated, for example, based on the eye movement of a user. The sensor(s) 2424 may include a head tracking sensor to track the head movement of a user. A display of a point cloud may be updated, for example, based on the head movement of a user. The sensor(s) 2424 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 2416 and 2418 or a hard disk installed in hard disk drive 2410. The computer program products may be means for providing software to the computer system 2400. The computer programs (which may also be called computer control logic) may be stored in the main memory 2406 and/or the secondary memory 2408. The computer programs may be received via the communications interface 2420. Such computer programs, when executed, may enable the computer system 2400 to implement the present disclosure as discussed herein. In particular, the computer programs, when executed, may enable the processor 2404 to implement the processes of the present disclosure, such as any of the methods described herein. Accordingly, such computer programs may represent controllers of the computer system 2400.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 25 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2530 may include one or more processors 2531, which may execute instructions stored in the random-access memory (RAM) 2533, the removable media 2534 (such as a Universal Serial Bus (USB) drive, compact disk (CD) or digital versatile disk (DVD), or floppy disk drive), or any other desired storage medium. Instructions may also be stored in an attached (or internal) hard drive 2535. The computing device 2530 may also include a security processor (not shown), which may execute instructions of one or more computer programs to monitor the processes executing on the processor 2531 and any process that requests access to any hardware and/or software components of the computing device 2530 (e.g. , ROM 2532, RAM 2533, the removable media 2534, the hard drive 2535, the device controller 2537, a network interface 2539, a GPS 2541, a Bluetooth interface 2542, a WiFi interface 2543, etc.). The computing device 2530 may include one or more output devices, such as the display 2536 (e.g., a screen, a display device, a monitor, a television, etc.), and may include one or more output device controllers 2537, such as a video processor. There may also be one or more user input devices 2538, such as a remote control, keyboard, mouse, touch screen, microphone, etc. The computing device 2530 may also include one or more network interfaces, such as a network interface 2539, which may be a wired interface, a wireless interface, or a combination of the two. The network interface 2539 may provide an interface for the computing device 2530 to communicate with a network 2540 (e.g., a RAN, or any other network). The network interface 2539 may include a modem (e.g., a cable modem), and the external network 2540 may include communication links, an external network, an in-home network, a provider's wireless, coaxial, fiber, or hybrid fiber/coaxial distribution system (e.g., a DOCSIS network), or any other desired network. Additionally, the computing device 2530 may include a location-detecting device, such as a global positioning system (GPS) microprocessor 2541, which may be configured to receive and process global positioning signals and determine, with possible assistance from an external server and antenna, a geographic position of the computing device 2530.

The example in FIG. 25 may be a hardware configuration, although the components shown may be implemented as software as well. Modifications may be made to add, remove, combine, divide, etc. components of the computing device 2530 as desired. Additionally, the components may be implemented using basic computing devices and components, and the same components (e.g., processor 2531, ROM storage 2532, display 2536, etc.) may be used to implement any of the other computing devices and components described herein. For example, the various components described herein may be implemented using computing devices having components such as a processor executing computer-executable instructions stored on a computer-readable medium, as shown in FIG. 25. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: decoding, from a bitstream, model information indicating a model, of a plurality of models, representing a geometry of a portion of a point cloud associated with content, wherein the portion of the point cloud is contained in a sub-volume of the point cloud.

Clause 2. The method of clause 1, further comprising: decoding, from the bitstream and based on the model, geometry information corresponding to the geometry of the portion of the point cloud.

Clause 3. The method of clause 1 or clause 2, wherein the model is a first model, the method further comprising: decoding, from the bitstream, model information indicating a second model, wherein the second model is configured to represent a geometry of a second portion of a point cloud, and wherein the second portion of the point cloud is contained in a second sub-volume of the point cloud; and decoding, from the bitstream and based on the second model, geometry information corresponding to the geometry of the second portion of the point cloud, wherein the second model is different from the first model.

Clause 4. The method of any one of clauses 1 to 3, wherein the decoding the model information comprises: decoding, from the bitstream and based on a predictor of the model information, the model information.

Clause 5. The method of any one of clauses 1 to 4, wherein the model information comprises a residual value associated with an indication of the model, and wherein the decoding the model information comprises: decoding, from the bitstream, the residual value; and selecting, based on the residual value and a predictor of the model information, the model from the plurality of models.

Clause 6. The method of any one of clauses 1 to 5, wherein the decoding the model information comprises entropy decoding a residual value associated with an indication of the model.

Clause 7. The method of any one of clauses 1 to 6, wherein the decoding the model information is performed by a context-adaptive binary arithmetic decoder.

Clause 8. The method of any one of clauses 1 to 7, further comprising: decoding, from the bitstream, volume information indicating the sub-volume.

Clause 9. The method of any one of clauses 1 to 8, wherein the sub-volume is one sub-volume from a set of sub-volumes obtained from iteratively partitioning a volume encompassing the point cloud.

Clause 10. The method of any one of clauses 1 to 9, wherein the plurality of models comprises a triangle-based model and a tree-based model.

Clause 11. A method comprising: decoding, from a bitstream, model information indicating respective models for sub-volumes of a point cloud associated with content, wherein each of the models is: used to represent a geometry of a portion of the point cloud contained in a respective sub-volume of the sub-volumes; and selected from a plurality of models.

Clause 12. The method of clause 11, further comprising: decoding, from the bitstream and based on the model information, geometry information corresponding to the geometry of the portion of the point cloud.

Clause 13. The method of clause 11 or clause 12, wherein the model information indicates at least a first model and a second model, the first model being different from the second model.

Clause 14. The method of any one of clauses 11 to 13, wherein the first model is a triangle-based model, and the second model is a tree-based model.

Clause 15. The method of any one of clauses 11 to 14, wherein the sub-volumes comprise a set of sub-volumes obtained from iteratively partitioning a volume encompassing the point cloud.

Clause 16. The method of any one of clauses 11 to 15, wherein the model information comprises an index of an ordered list of candidate models for representing geometries of portions of the point cloud.

Clause 17. The method of any one of clauses 11 to 16, wherein the decoding the model information comprises: decoding, from the bitstream and based on a predictor of the model information, the model information.

Clause 18. The method of any one of clauses 11 to 17, wherein the model information comprises a predictor of the model information, and for each sub-volume of the sub-volumes, the predictor of the model information is based on one or more of: at least one model respectively determined for at least one neighboring sub-volume of each sub-volume; an average of model information indicating models selected for at least one of a plurality of neighboring sub-volumes; a median of model information indicating models selected for at least one of a plurality of neighboring sub-volumes; or the most frequent model information among model information indicating models selected for at least one of a plurality of neighboring sub-volumes.

Clause 19. A computing device comprising: one or more processors; and memory storing instructions that, when executed by the one or more processors, cause the computing device to perform: the method of any one of clauses 1 to 10; or the method of any one of clauses 11 to 18.

Clause 20. A system comprising: a first computing device configured to perform the method of any one of clauses 1 to 10 or the method of any one of clauses 11 to 18; and a second computing device configured to encode the portion of the point cloud.

Clause 21. A computer-readable medium storing instructions that, when executed, cause performance of: the method of any one of clauses 1 to 10 or the method of any one of clauses 11 to 18.

Clause 22. A method comprising: determining a model, from a plurality of models, to represent a geometry of a portion of a point cloud associated with content, wherein the portion of the point cloud is contained in a sub-volume of the point cloud.

Clause 23. The method of clause 22, further comprising: encoding, in a bitstream, model information indicating the model.

Clause 24. The method of clause 22 or clause 23, further comprising: encoding, in the bitstream and based on the model, geometry information corresponding to the geometry of the portion of the point cloud.

Clause 25. The method of any one of clauses 22 to 24, wherein the model is a first model, the method further comprising: determining a second model, from the plurality of models, to represent a geometry of a second portion of the point cloud, wherein the second portion of the point cloud is contained in a second sub-volume of the point cloud; and encoding, in the bitstream and based on the second model, geometry information corresponding to the geometry of the second portion of the point cloud, wherein the second model is different from the first model.

Clause 26. The method of any one of clauses 22 to 25, wherein the determining the model comprises: selecting the model from at least two candidate models, wherein the at least two candidate models comprise a triangle-based model and a tree-based model.

Clause 27. The method of any one of clauses 22 to 26, wherein the determining the model comprises: selecting, based on classifying the geometry of the portion of the point cloud contained in the sub-volume, the model from at least two candidate models.

Clause 28. The method of any one of clauses 22 to 27, further comprising: encoding, in the bitstream, volume information indicating the sub-volume.

Clause 29. A computing device comprising: one or more processors; and memory storing instructions that, when executed by the one or more processors, cause the computing device to perform: the method of any one of clauses 22 to 28.

Clause 30. A system comprising: a first computing device configured to perform the method of any one of clauses 22 to 28; and a second computing device configured to decode the portion of the point cloud.

Clause 31. A computer-readable medium storing instructions that, when executed, cause performance of: the method of any one of clauses 22 to 28.

Clause 32. A method comprising: selecting a model, from a plurality of models, to represent a geometry of a portion of a point cloud contained in a sub-volume of a volume encompassing the point cloud; encoding, in a bitstream, model information indicating the model; and encoding, in the bitstream and based on the model, geometry information corresponding to the geometry of the portion of the point cloud.

Clause 33. The method of clause 32, wherein the sub-volume is one sub-volume from a set of sub-volumes obtained from iteratively spatially partitioning the volume.

Clause 34. The method of clause 32 or clause 33, wherein the model information further indicates respective models for the sub-volumes, wherein each of the models is selected from one of the plurality of models, and wherein each of the models is used to represent geometry of a portion of a point cloud contained in a respective sub-volume of the sub-volumes.

Clause 35. The method of any one of clauses 32 to 34, wherein the model information is encoded in the bitstream based on a predictor of the model information.

Clause 36. The method of any one of clauses 32 to 35, further comprises encoding a prediction information in the bitstream indicating a type of the predictor of the model information among a set of predictor types.

Clause 37. The method of any one of clauses 32 to 36, wherein the model information comprises a residual value associated with an indication of the model, and wherein the encoding the model information in the bitstream comprises: obtaining the residual value based on the model information from the predictor of the model information; and encoding, in the bitstream, the residual value.

Clause 38. The method of any one of clauses 32 to 37, wherein the encoding in the bitstream of the residual value comprises entropy encoding the residual value.

Clause 39. The method of any one of clauses 32 to 38, wherein the residual value is encoded as a binary codeword with each binary symbol of the binary codeword being entropy encoded in the bitstream by a binary entropy encoder.

Clause 40. The method of any one of clauses 32 to 39, wherein the binary entropy encoder is a context-adaptive binary arithmetic encoder using a context selected, from a plurality of contexts, based on the predictor for entropy encoding the binary symbols.

Clause 41. The method of any one of clauses 32 to 40, wherein the determining the model comprises selecting the model from a list of at least two candidate models.

Clause 42. The method of any one of clauses 32 to 41, wherein the at least two candidate models comprises a triangle-based model.

Clause 43. The method of any one of clauses 32 to 42, wherein the at least two candidate models is a TriSoup model.

Clause 44. The method of any one of clauses 32 to 43, wherein the at least two candidate models is a tree-based model.

Clause 45. The method of any one of clauses 32 to 44, wherein the model is selected from the list based on a Rate-Distortion Optimization cost.

Clause 46. The method of any one of clauses 32 to 45, wherein the selection of the model is based on classifying the geometry of the portion of the point cloud contained in the sub-volume.

Clause 47. The method of any one of clauses 32 to 46, wherein the geometry of the portion of the point cloud contained in the sub-volume is classified based on a number of points of the point cloud contained in the sub-volume.

Clause 48. The method of any one of clauses 32 to 47, wherein the geometry of the portion of the point cloud contained in the sub-volume is classified as being a surface or a non-surface based on whether an absolute difference, between the number of points of the point cloud contained in the sub-volume and the square of a size of the sub-volume, is lower than a threshold.

Clause 49. The method of any one of clauses 32 to 48, wherein the geometry of the portion of the point cloud contained in the sub-volume is classified as being a surface based on: the absolute difference being lower than the threshold; and the average number of children per parent node of a tree of the tree-based model used to represent the geometry of the portion of the point cloud fulfill a condition.

Clause 50. The method of any one of clauses 32 to 49, wherein the tree is an octree, and wherein the condition is fulfilled based on the average number of children per parent node equals 2.

Clause 51. The method of any one of clauses 32 to 50, wherein the at least two candidate models comprises a tree-based model and a triangle-based model, and wherein the model is selected as being the triangle-based model based on the geometry of the portion of the point cloud contained in the sub-volume being classified as a surface, and as being the tree-based model otherwise.

Clause 52. The method of any one of clauses 32 to 51, further including encoding, in the bitstream, volume information indicating the sub-volume of the volume.

Clause 53. A computing device comprising: one or more processors; and memory storing instructions that, when executed by the one or more processors, cause the computing device to perform: the method of any one of clauses 32 to 52.

Clause 54. A system comprising: a first computing device configured to perform the method of any one of clauses 32 to 52; and a second computing device configured to decode the portion of the point cloud.

Clause 55. A computer-readable medium storing instructions that, when executed, cause performance of: the method of any one of clauses 32 to 52.

Clause 56. A method comprising: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud.

Clause 57. The method of clause 56, wherein the sub-volume is one sub-volume from a set of sub-volumes obtained from iteratively spatially partitioning the volume.

Clause 58. The method of clause 56 or clause 57, wherein the model information further indicates respective models for the sub-volumes, wherein each of the models is selected from one of the plurality of models, and wherein each of the models is used to represent geometry of a portion of a point cloud contained in a respective sub-volume of the sub-volumes.

Clause 59. The method of any one of clauses 56 to 58, wherein the model information is decoded from the bitstream based on a predictor of the model information.

Clause 60. The method of any one of clauses 56 to 59, further comprises decoding a prediction information from the bitstream indicating the predictor of the model information.

Clause 61. The method of any one of clauses 56 to 60, wherein the model information comprises a residual value associated with an indication of the model, and wherein the decoding the model information from the bitstream comprises: decoding, from the bitstream, the residual value; and selecting the model, from the plurality of models, based on the residual value and the predictor of the model information.

Clause 62. The method of any one of clauses 56 to 61, wherein the decoding from the bitstream of the residual value comprises entropy decoding the residual value.

Clause 63. The method of any one of clauses 56 to 62, wherein the residual value is obtained from a binary codeword with each binary symbol of the binary codeword being entropy decoded from the bitstream by a binary entropy decoder.

Clause 64. The method of any one of clauses 56 to 63, wherein the binary entropy decoder is a context-adaptive binary arithmetic decoder using a context selected, from a plurality of contexts, based on the predictor for entropy decoding the binary symbols.

Clause 65. The method of any one of clauses 56 to 64, further comprising decoding, from the bitstream, volume information indicating the sub-volume of the volume.

Clause 66. The method of any one of clauses 56 to 65, wherein the volume information further indicates a topology of sub-volumes of the volume.

Clause 67. The method of any one of clauses 56 to 66, wherein the volume information further indicates whether each of the sub-volumes is an occupied sub-volume containing a portion (e.g., at least a point) of the point cloud.

Clause 68. The method of any one of clauses 56 to 67, wherein the volume information further includes a space-partitioning tree that partitions the volume into the set of sub-volumes.

Clause 69. The method of any one of clauses 56 to 68, wherein the space-partitioning tree is determined based on an occupancy tree having a root node being associated with the volume.

Clause 70. The method of any one of clauses 56 to 69, wherein the volume information further indicates one sub-volume of the set of sub-volumes is associated with at least one occupied leaf node of the occupancy tree.

Clause 71. The method of any one of clauses 56 to 70, wherein the volume information further indicates one sub-volume is associated with more than one occupied leaf node of the occupancy tree.

Clause 72. The method of any one of clauses 56 to 71, wherein the volume information further indicates at least one dimension or a size of the sub-volumes.

Clause 73. The method of any one of clauses 56 to 72, wherein the volume information further indicates at least one shape of the sub-volumes.

Clause 74. The method of any one of clauses 56 to 73, wherein the at least one shape is a cuboid.

Clause 75. The method of any one of clauses 56 to 74, wherein a size of the cuboid corresponds to a product of: a first integer number of occupied leaf nodes along a first direction; a second integer number of occupied leaf nodes along a second direction; a third integer number of occupied leaf nodes along a third direction.

Clause 76. The method of any one of clauses 56 to 75, wherein the first, second, and third integer values is each equal to a fourth integer value.

Clause 77. The method of any one of clauses 56 to 76, wherein the volume information further indicates: the first, second, and third integer value; or the fourth integer value.

Clause 78. The method of any one of clauses 56 to 77, wherein the volume information further indicates one sub-volume of the set of sub-volumes is associated with at least one non-leaf node of the occupancy tree located at a tree level of the occupancy tree.

Clause 79. The method of any one of clauses 56 to 78, wherein the volume information indicates the sub-volume is associated with one non-leaf node of the occupancy tree.

Clause 80. The method of any one of clauses 56 to 79, wherein the volume information indicates the sub-volume is associated with a set of non-leaf nodes of the occupancy tree.

Clause 81. The method of any one of clauses 56 to 80, wherein the set of non-leaf nodes associated with the sub-volume defines a cuboid.

Clause 82. The method of any one of clauses 56 to 81, wherein the volume information further indicates a tree level and the sub-volume is associated with at least one non-leaf node at the tree level.

Clause 83. The method of any one of clauses 56 to 82, wherein the volume information further indicates the sub-volume is associated with at least one node at a deeper level.

Clause 84. The method of any one of clauses 56 to 83, wherein the volume information further indicates each of the at least one non-leaf node at the tree level is associated with a tree of further sub-volumes.

Clause 85. The method of any one of clauses 56 to 84, wherein the volume information further indicates sub-volume split flag per non-leaf node at the tree level to indicate a non-leaf node at the tree level is associated with a tree of further sub-volumes having a non-leaf node at the tree level as largest further sub-volume and smaller further sub-volumes based on non-leaf node at least one deeper level as child nodes.

Clause 86. The method of any one of clauses 56 to 85, wherein the volume information further indicates the tree level corresponding to the largest further sub-volume.

Clause 87. The method of any one of clauses 56 to 86, wherein the model comprises a TriSoup model, and wherein the geometry information indicates TriSoup information associated with at least one TriSoup node.

Clause 88. The method of any one of clauses 56 to 87, wherein the model comprises a tree-based model, and wherein the geometry information indicates occupancy bits indicating the occupancy of nodes of a space-partitioning tree of the tree-based model.

Clause 89. The method of any one of clauses 56 to 88, wherein the geometry information indicates at least one parameter of the space-partitioning tree of the tree-based model.

Clause 90. The method of any one of clauses 56 to 89, wherein the at least one parameter is a maximum depth of the space-partitioning tree or a minimal size of a node of the space-partitioning tree or a combination of thereof.

Clause 91. The method of any one of clauses 56 to 90, wherein the model information comprises an index of an ordered list of candidate models for representing geometries of portions of the point cloud.

Clause 92. The method of any one of clauses 56 to 91, wherein the index is a binary codeword.

Clause 93. The method of any one of clauses 56 to 92, wherein the list of candidate models comprises at least two candidate models, and wherein the index indicates one of the at least two candidate models.

Clause 94. The method of any one of clauses 56 to 93, wherein the at least two candidate models comprises a tree-based model.

Clause 95. The method of any one of clauses 56 to 94, wherein the tree-based model comprises an occupancy tree, wherein the occupancy tree is based on a space-partitioning tree.

Clause 96. The method of any one of clauses 56 to 95, wherein the at least two candidate models comprises a triangle-based model.

Clause 97. The method of any one of clauses 56 to 96, wherein the triangle-based model is a TriSoup model.

Clause 98. The method of any one of clauses 56 to 97, wherein the predictor of the model information is based on at least one model respectively determined for at least one neighboring sub-volume of the sub-volume.

Clause 99. The method of any one of clauses 56 to 98, wherein the neighboring sub-volume is adjacent to the sub-volume.

Clause 100. The method of any one of clauses 56 to 99, wherein the neighboring sub-volume is adjacent to the sub-volume based on the neighboring sub-volume sharing a face, an edge, and/or a vertex with the sub-volume.

Clause 101. The method of any one of clauses 56 to 100, wherein the neighboring sub-volume is indicated by an index of a list of ordered sub-volumes including both the sub-volume and neighboring sub-volumes.

Clause 102. The method of any one of clauses 56 to 101, wherein the list comprises indications of respective models determined for respective ordered sub-volumes.

Clause 103. The method of any one of clauses 56 to 102, wherein the predictor of the model information is based on an average of model information indicating models selected for at least one of the neighboring sub-volumes.

Clause 104. The method of any one of clauses 56 to 103, wherein the predictor of the model information is based on a median of model information indicating models selected for at least one of the neighboring sub-volumes.

Clause 105. The method of any one of clauses 56 to 104, wherein the predictor of the model is based on the most frequent model information among model information indicating models selected for at least one of the neighboring sub-volumes.

Clause 106. A computing device comprising: one or more processors; and memory storing instructions that, when executed by the one or more processors, cause the computing device to perform: the method of any one of clauses 56 to 105.

Clause 107. A system comprising: a first computing device configured to perform the method of any one of clauses 56 to 105; and a second computing device configured to encode the portion of the point cloud.

Clause 108. A computer-readable medium storing instructions that, when executed, cause performance of: the method of any one of clauses 56 to 105.

Clause 109. A device comprising means for: selecting a model, from a plurality of models, to represent a geometry of a portion of a point cloud contained in a sub-volume of a volume encompassing the point cloud; encoding, in a bitstream, model information indicating the model; and encoding, in the bitstream and based on the model, geometry information corresponding to the geometry of the portion of the point cloud.

Clause 110. A device comprising one or more processor configured to: select a model, from a plurality of models, to represent a geometry of a portion of a point cloud contained in a sub-volume of a volume encompassing the point cloud; encode, in a bitstream, model information indicating the model; and encode, in the bitstream and based on the model, geometry information corresponding to the geometry of the portion of the point cloud.

Clause 111. A device comprising: a selector configured to select a model, from a plurality of models, to represent a geometry of a portion of a point cloud contained in a sub-volume of a volume encompassing the point cloud; an encoder configured to encode, in a bitstream, model information indicating the model; and to encode, in the bitstream and based on the model, geometry information corresponding to the geometry of the portion of the point cloud.

Clause 112. A computer program product including instructions which, when the program is executed by one or more processors, causes the one or more processors to carry out a method comprising: selecting a model, from a plurality of models, to represent a geometry of a portion of a point cloud contained in a sub-volume of a volume encompassing the point cloud; encoding, in a bitstream, model information indicating the model; and encoding, in the bitstream and based on the model, geometry information corresponding to the geometry of the portion of the point cloud.

Clause 113. A (non-transitory) computer-readable medium including instructions for causing one or more processors to perform: selecting a model, from a plurality of models, to represent a geometry of a portion of a point cloud contained in a sub-volume of a volume encompassing the point cloud; encoding, in a bitstream, model information indicating the model; and encoding, in the bitstream and based on the model, geometry information corresponding to the geometry of the portion of the point cloud.

Clause 114. A device comprising means for: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud.

Clause 115. A device comprising one or more processor configured to: decode, from a bitstream, model information indicating a model, from a plurality of models, to represent a geometry of a portion of a point cloud contained in a sub-volume of a volume encompassing the point cloud; and decode, from the bitstream and based on the model, geometry information corresponding to the geometry of the portion of the point cloud.

Clause 116. A device comprising: a decoder configured to decode, from a bitstream, model information indicating a model, from a plurality of models, to represent a geometry of a portion of a point cloud contained in a sub-volume of a volume encompassing the point cloud; and to decode, from the bitstream and based on the model, geometry information corresponding to the geometry of the portion of the point cloud.

Clause 117. A computer program product including instructions which, when the program is executed by one or more processors, causes the one or more processors to carry out a method comprising: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud.

Clause 118. A (non-transitory) computer-readable medium including instructions for causing one or more processors to perform: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud.

A computing device may perform a method comprising multiple operations. The computing device may comprise a decoder. The computing device (e.g., decoder) may decode, from a bitstream, model information indicating a model, of a plurality of models. The model may represent a geometry of a portion of a point cloud associated with content. The portion of the point cloud may be contained in a sub-volume of the point cloud. The computing device may decode geometry information corresponding to the geometry of the portion of the point cloud, for example, from the bitstream and based on the model. The model may be a first model. The computing device may decode, from the bitstream, model information indicating a second model. The second model may be configured to represent a geometry of a second portion of a point cloud, and the second portion of the point cloud may be contained in a second sub-volume of the point cloud. The computing device may decode geometry information corresponding to the geometry of the second portion of the point cloud, for example, from the bitstream and based on the second model. The second model may be different from the first model. The computing device may decode the model information, for example, from the bitstream and based on a predictor of the model information. The model information may comprise a residual value associated with an indication of the model. The computing device may decode, from the bitstream, the residual value. The computing device may select the model from the plurality of models, for example, based on the residual value and a predictor of the model information. The computing device may entropy decode a residual value associated with an indication of the model. Decoding the model information may be performed by a context-adaptive binary arithmetic decoder. The computing device may decode, from the bitstream, volume information indicating the sub-volume. The sub-volume may be one sub-volume from a set of sub-volumes obtained from iteratively partitioning a volume encompassing the point cloud. The plurality of models may comprise a triangle-based model and a tree-based model. The computing device may comprise one or more processors and memory, storing instructions that, when executed by the one or more processors, perform the method described herein. A system may comprise the computing device configured to perform the described method, additional operations, and/or include additional elements; and a second computing device configured to encode the portion of the point cloud. A computer-readable medium may store instructions that, when executed, cause performance of the described method, additional operations, and/or include additional elements.

A computing device may perform a method comprising multiple operations. The computing device may comprise a decoder. The computing device (e.g., decoder) may decode, from a bitstream, model information indicating respective models for sub-volumes of a point cloud associated with content. Each of the models may be used to represent a geometry of a portion of the point cloud contained in a respective sub-volume of the sub-volumes. Each of the models may be selected from a plurality of models. The computing device may decode geometry information corresponding to the geometry of the portion of the point cloud, for example, from the bitstream and based on the model information. The model information may indicate at least a first model and a second model. The first model may be different from the second model. The first model may be a triangle-based model, and the second model may be a tree-based model. The sub-volumes may comprise a set of sub-volumes obtained from iteratively partitioning a volume encompassing the point cloud. The model information may comprise an index of an ordered list of candidate models for representing geometries of portions of the point cloud. The computing device may decode the model information, for example, from the bitstream and based on a predictor of the model information. The model information may comprise a predictor of the model information. For each sub-volume of the sub-volumes, the predictor of the model information may be based on one or more of: at least one model respectively determined for at least one neighboring sub-volume of each sub-volume; an average of model information indicating models selected for at least one of a plurality of neighboring sub-volumes; a median of model information indicating models selected for at least one of a plurality of neighboring sub-volumes; or the most frequent model information among model information indicating models selected for at least one of a plurality of neighboring sub-volumes. The computing device may comprise one or more processors and memory, storing instructions that, when executed by the one or more processors, perform the method described herein. A system may comprise the computing device configured to perform the described method, additional operations, and/or include additional elements; and a second computing device configured to encode the portion of the point cloud. A computer-readable medium may store instructions that, when executed, cause performance of the described method, additional operations, and/or include additional elements.

A computing device may perform a method comprising multiple operations. The computing device may be an encoder. The computing device (e.g., encoder) may determine a model, from a plurality of models, to represent a geometry of a portion of a point cloud associated with content. The portion of the point cloud may be contained in a sub-volume of the point cloud. The computing device may encode, in a bitstream, model information indicating the model. The computing device may encode geometry information corresponding to the geometry of the portion of the point cloud, for example, in the bitstream and based on the model. The model may be a first model. The computing device may determine a second model, from the plurality of models, to represent a geometry of a second portion of the point cloud. The second portion of the point cloud may be contained in a second sub-volume of the point cloud. The computing device may encode geometry information corresponding to the geometry of the second portion of the point cloud, for example, in the bitstream and based on the second model. The second model may be different from the first model. The computing device may select the model from at least two candidate models. The at least two candidate models may comprise a triangle-based model and a tree-based model. The computing device may select the model from at least two candidate models, for example, based on classifying the geometry of the portion of the point cloud contained in the sub-volume. The computing device may encode, in the bitstream, volume information indicating the sub-volume. The computing device may comprise one or more processors and memory, storing instructions that, when executed by the one or more processors, perform the method described herein. A system may comprise the computing device configured to perform the described method, additional operations, and/or include additional elements; and a second computing device configured to decode the portion of the point cloud. A computer-readable medium may store instructions that, when executed, cause performance of the described method, additional operations, and/or include additional elements.

A computing device may perform a method comprising multiple operations. The computing device may be an encoder. The computing device (e.g., encoder) may select a model, from a plurality of models, to represent a geometry of a portion of a point cloud contained in a sub-volume of a volume encompassing the point cloud. The computing device may encode, in a bitstream, model information indicating the model. The computing device may encode geometry information corresponding to the geometry of the portion of the point cloud, for example, in the bitstream and based on the model. The sub-volume may be one sub-volume from a set of sub-volumes obtained from iteratively spatially partitioning the volume. The model information may further indicate respective models for the sub-volumes. Each of the models may be selected from one of the plurality of models. Each of the models may be used to represent geometry of a portion of a point cloud contained in a respective sub-volume of the sub-volumes. The model information may be encoded in the bitstream, for example, based on a predictor of the model information. The computing device may encode a prediction information in the bitstream indicating a type of the predictor of the model information among a set of predictor types. The model information may comprise a residual value associated with an indication of the model. The computing device may obtain the residual value, for example, based on the model information from the predictor of the model information. The computing device may encode, in the bitstream, the residual value. The computing device may entropy encode the residual value. The residual value may be encoded as a binary codeword with each binary symbol of the binary codeword being entropy encoded in the bitstream by a binary entropy encoder. The binary entropy encoder may be a context-adaptive binary arithmetic encoder using a context selected, from a plurality of contexts, based on the predictor for entropy encoding the binary symbols. The computing device may select the model from a list of at least two candidate models. The at least two candidate models may comprise a triangle-based model. The at least two candidate models may comprise a TriSoup model. The at least two candidate models may comprise a tree-based model. The model may be selected from the list based on a Rate-Distortion Optimization cost. The selection of the model may be based on classifying the geometry of the portion of the point cloud contained in the sub-volume. The geometry of the portion of the point cloud contained in the sub-volume may be classified based on a number of points of the point cloud contained in the sub-volume. The geometry of the portion of the point cloud contained in the sub-volume may be classified as being a surface or a non-surface, for example, based on whether an absolute difference, between the number of points of the point cloud contained in the sub-volume and the square of a size of the sub-volume, is lower than a threshold. The geometry of the portion of the point cloud contained in the sub-volume may be classified as being a surface, for example, based on: the absolute difference being lower than the threshold; and the average number of children per parent node of a tree of the tree-based model used to represent the geometry of the portion of the point cloud fulfilling a condition. The tree may be an octree. The condition may be fulfilled, for example, based on the average number of children per parent node equals 2. The at least two candidate models may comprise a tree-based model and a triangle-based model. The model may be selected as being the triangle-based model, for example, based on the geometry of the portion of the point cloud contained in the sub-volume being classified as a surface. The model may be selected as being the tree-based model, for example, based on the geometry of the portion of the point cloud contained in the sub-volume being classified as a non-surface. The computing device may encode, in the bitstream, volume information indicating the sub-volume of the volume. The computing device may comprise one or more processors and memory, storing instructions that, when executed by the one or more processors, perform the method described herein. A system may comprise the computing device configured to perform the described method, additional operations, and/or include additional elements; and a second computing device configured to decode the portion of the point cloud. A computer-readable medium may store instructions that, when executed, cause performance of the described method, additional operations, and/or include additional elements.

A computing device may perform a method comprising multiple operations. The computing device may comprise a decoder. The computing device (e.g., decoder) may decode, from a bitstream, model information indicating a model, from a plurality of models. The model may represent a geometry of a portion of a point cloud contained in a sub-volume of a volume encompassing the point cloud. The computing device may decode geometry information corresponding to the geometry of the portion of the point cloud, for example, from the bitstream and based on the model. The sub-volume may be one sub-volume from a set of sub-volumes obtained from iteratively spatially partitioning the volume. The model information may further indicate respective models for the sub-volumes. Each of the models may be selected from one of the plurality of models. Each of the models may be used to represent geometry of a portion of a point cloud contained in a respective sub-volume of the sub-volumes. The model information may be decoded from the bitstream based on a predictor of the model information. The computing device may decode a prediction information from the bitstream indicating the predictor of the model information. The model information may comprise a residual value associated with an indication of the model. The computing device may decode, from the bitstream, the residual value. The computing device may select the model, from the plurality of models, for example, based on the residual value and the predictor of the model information. The computing device may entropy decode the residual value. The residual value may be obtained from a binary codeword with each binary symbol of the binary codeword being entropy decoded from the bitstream by a binary entropy decoder. The binary entropy decoder may be a context-adaptive binary arithmetic decoder using a context selected, from a plurality of contexts, based on the predictor for entropy decoding the binary symbols. The computing device may decode, from the bitstream, volume information indicating the sub-volume of the volume. The volume information may further indicate a topology of sub-volumes of the volume. The volume information may further indicate whether each of the sub-volumes is an occupied sub-volume containing a portion (e.g., at least a point) of the point cloud. The volume information may further include a space-partitioning tree that partitions the volume into the set of sub-volumes. The space-partitioning tree may be determined based on an occupancy tree having a root node being associated with the volume. The volume information may further indicate that one sub-volume of the set of sub-volumes is associated with at least one occupied leaf node of the occupancy tree. The volume information may further indicate that one sub-volume is associated with more than one occupied leaf node of the occupancy tree. The volume information may further indicate at least one dimension or a size of the sub-volumes. The volume information may further indicate at least one shape of the sub-volumes. The at least one shape may be a cuboid. A size of the cuboid may correspond to a product of: a first integer number of occupied leaf nodes along a first direction; a second integer number of occupied leaf nodes along a second direction; a third integer number of occupied leaf nodes along a third direction. The first, second, and third integer values may be each equal to a fourth integer value. The volume information may further indicate: the first, second, and third integer value; or the fourth integer value. The volume information may further indicate that one sub-volume of the set of sub-volumes is associated with at least one non-leaf node of the occupancy tree located at a tree level of the occupancy tree. The volume information may indicate that the sub-volume is associated with one non-leaf node of the occupancy tree. The volume information may indicate that the sub-volume is associated with a set of non-leaf nodes of the occupancy tree. The set of non-leaf nodes associated with the sub-volume may define a cuboid. The volume information may further indicate a tree level and the sub-volume may be associated with at least one non-leaf node at the tree level. The volume information may further indicate that the sub-volume is associated with at least one node at a deeper level. The volume information may further indicate that each of the at least one non-leaf node at the tree level is associated with a tree of further sub-volumes. The volume information may further indicate sub-volume split flag per non-leaf node at the tree level to indicate that a non-leaf node at the tree level is associated with a tree of further sub-volumes having a non-leaf node at the tree level as largest further sub-volume and smaller further sub-volumes based on non-leaf node at least one deeper level as child nodes. The volume information may further indicate the tree level corresponding to the largest further sub-volume. The model may comprise a TriSoup model. The geometry information may indicate TriSoup information associated with at least one TriSoup node. The model may comprise a tree-based model. The geometry information may indicate occupancy bits indicating the occupancy of nodes of a space-partitioning tree of the tree-based model. The geometry information may indicate at least one parameter of the space-partitioning tree of the tree-based model. The at least one parameter may be a maximum depth of the space-partitioning tree or a minimal size of a node of the space-partitioning tree or a combination of thereof. The model information may comprise an index of an ordered list of candidate models for representing geometries of portions of the point cloud. The index may be a binary codeword. The list of candidate models may comprise at least two candidate models, and the index may indicate one of the at least two candidate models. The at least two candidate models may comprise a tree-based model. The tree-based model may comprise an occupancy tree. The occupancy tree may be based on a space-partitioning tree. The at least two candidate models may comprise a triangle-based model. The triangle-based model may be a TriSoup model. The predictor of the model information may be based on at least one model respectively determined for at least one neighboring sub-volume of the sub-volume. The neighboring sub-volume may be adjacent to the sub-volume. The neighboring sub-volume may be adjacent to the sub-volume based on the neighboring sub-volume sharing a face, an edge, and/or a vertex with the sub-volume. The neighboring sub-volume may be indicated by an index of a list of ordered sub-volumes including both the sub-volume and neighboring sub-volumes. The list may comprise indications of respective models determined for respective ordered sub-volumes. The predictor of the model information may be based on an average of model information indicating models selected for at least one of the neighboring sub-volumes. The predictor of the model information may be based on a median of model information indicating models selected for at least one of the neighboring sub-volumes. The predictor of the model may be based on the most frequent model information among model information indicating models selected for at least one of the neighboring sub-volumes. The computing device may comprise one or more processors and memory, storing instructions that, when executed by the one or more processors, perform the method described herein. A system may comprise the computing device configured to perform the described method, additional operations, and/or include additional elements; and a second computing device configured to encode the portion of the point cloud. A computer-readable medium may store instructions that, when executed, cause performance of the described method, additional operations, and/or include additional elements.

A device may comprise means for selecting a model, from a plurality of models, to represent a geometry of a portion of a point cloud contained in a sub-volume of a volume encompassing the point cloud. The device may comprise means for encoding, in a bitstream, model information indicating the model. The device may comprise means for encoding geometry information corresponding to the geometry of the portion of the point cloud, for example, in the bitstream and based on the model. A device may comprise one or more processor. The one or more processor may be configured to select a model, from a plurality of models, to represent a geometry of a portion of a point cloud contained in a sub-volume of a volume encompassing the point cloud. The one or more processor may be configured to encode, in a bitstream, model information indicating the model. The one or more processor may be configured to encode geometry information corresponding to the geometry of the portion of the point cloud, for example, in the bitstream and based on the model. A device may comprise a selector configured to select a model, from a plurality of models, to represent a geometry of a portion of a point cloud contained in a sub-volume of a volume encompassing the point cloud. The device may comprise an encoder. The encoder may be configured to encode, in a bitstream, model information indicating the model. The encoder may be configured to encode geometry information corresponding to the geometry of the portion of the point cloud, for example, in the bitstream and based on the model. A computer program product may include instructions. The instructions may cause one or more processors to carry out a method, for example, when/if the program is executed by the one or more processors. The method may comprise: selecting a model, from a plurality of models, to represent a geometry of a portion of a point cloud contained in a sub-volume of a volume encompassing the point cloud; encoding, in a bitstream, model information indicating the model; and encoding geometry information corresponding to the geometry of the portion of the point cloud, for example, in the bitstream and based on the model. A (non-transitory) computer-readable medium may include instructions for causing one or more processors to perform: selecting a model, from a plurality of models, to represent a geometry of a portion of a point cloud contained in a sub-volume of a volume encompassing the point cloud; encoding, in a bitstream, model information indicating the model; and encoding, for example, in the bitstream and based on the model, geometry information corresponding to the geometry of the portion of the point cloud. A device may comprise means for decoding, from a bitstream, model information indicating a model, from a plurality of models, to represent a geometry of a portion of a point cloud contained in a sub-volume of a volume encompassing the point cloud. The device may comprise means for decoding, from the bitstream and based on the model, geometry information corresponding to the geometry of the portion of the point cloud. A device may comprise one or more processor configured to: decode, from a bitstream, model information indicating a model, from a plurality of models, to represent a geometry of a portion of a point cloud contained in a sub-volume of a volume encompassing the point cloud; and decode geometry information corresponding to the geometry of the portion of the point cloud, for example, from the bitstream and based on the model. A device may comprise a decoder. The decoder may be configured to decode, from a bitstream, model information indicating a model, from a plurality of models, to represent a geometry of a portion of a point cloud contained in a sub-volume of a volume encompassing the point cloud. The decoder may be configured to decode geometry information corresponding to the geometry of the portion of the point cloud, for example, from the bitstream and based on the model. A computer program product may include instructions. The instructions may cause one or more processors to carry out a method, for example, when/if the program is executed by the one or more processors. The method may comprise: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud. A (non-transitory) computer-readable medium may include instructions for causing one or more processors to perform: decoding, from a bitstream, model information indicating a model, from a plurality of models, to represent a geometry of a portion of a point cloud contained in a sub-volume of a volume encompassing the point cloud; and decoding, from the bitstream and based on the model, geometry information corresponding to the geometry of the portion of the point cloud.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.    A method comprising:

decoding, from a bitstream, model information indicating a model, of a plurality of models, representing a geometry of a portion of a point cloud associated with content, wherein the portion of the point cloud is contained in a sub-volume of the point cloud; and
decoding, from the bitstream and based on the model, geometry information corresponding to the geometry of the portion of the point cloud.

2.    The method of claim 1, wherein the model is a first model, the method further comprising:

decoding, from the bitstream, model information indicating a second model, wherein the second model is configured to represent a geometry of a second portion of a point cloud, and wherein the second portion of the point cloud is contained in a second sub-volume of the point cloud; and
decoding, from the bitstream and based on the second model, geometry information corresponding to the geometry of the second portion of the point cloud,
wherein the second model is different from the first model.

3.    The method of claim 1 or claim 2, wherein the decoding the model information comprises:

decoding, from the bitstream and based on a predictor of the model information, the model information.

4. The method of any one of claims 1 to 3, wherein the model information comprises a residual value associated with an indication of the model, and wherein the decoding the model information comprises:

   decoding, from the bitstream, the residual value; and
   selecting, based on the residual value and a predictor of the model information, the model from the plurality of models.

5. The method of any one of claims 1 to 4, wherein the decoding the model information comprises entropy decoding a residual value associated with an indication of the model.

6. The method of any one of claims 1 to 5, wherein the decoding the model information is performed by a context-adaptive binary arithmetic decoder.

7. The method of any one of claims 1 to 6, further comprising:
   decoding, from the bitstream, volume information indicating the sub-volume.

8. The method of any one of claims 1 to 7, wherein the sub-volume is one sub-volume from a set of sub-volumes obtained from iteratively partitioning a volume encompassing the point cloud.

9. The method of any one of claims 1 to 8, wherein the plurality of models comprises a triangle-based model and a tree-based model.

10. The method of any one of claims 1 to 9, wherein the model information comprises an index of an ordered list of candidate models for representing geometries of portions of the point cloud.

11. The method of any one of claims 1 to 10, wherein the model information comprises a predictor of the model information, and for the sub-volume, the predictor of the model information is based on one or more of:

    at least one model respectively determined for at least one neighboring sub-volume of the sub-volume;
    an average of model information indicating models selected for at least one of a plurality of neighboring sub-volumes;
    a median of model information indicating models selected for at least one of a plurality of neighboring sub-volumes; or
    the most frequent model information among model information indicating models selected for at least one of a plurality of neighboring sub-volumes.

12. The method of any one of claims 1 to 11, wherein the model is selected based on the geometry of the portion of the point cloud.

13. A computing device comprising: one or more processors; and memory storing instructions that, when executed by the one or more processors, cause the computing device to perform:
    the method of any one of claims 1 to 12.

14. A system comprising:

    a first computing device configured to perform the method of any one of claims 1 to 12; and
    a second computing device configured to encode the portion of the point cloud.

15. A computer-readable medium storing instructions that, when executed, cause performance of:
    the method of any one of claims 1 to 12.

FIG. 1

FIG. 2

FIG. 3

occW$_{2,2}$ = 10011000

occW$_{3,2}$ = 11110001

occW$_{3,4}$ = 00010010

occW$_{3,3}$ = 00001000

occW$_{1,1}$ = 10000001

occW$_{2,1}$ = 10000000

occW$_{3,1}$ = 00110001

302

304

306

308

310

312

314

300

EP 4 571 649 A1

*FIG. 4*

$k_n$ (0xxxxx) = 1
$k_n$ (11xxxx) = 2
$k_n$ (10xxxx) = 3

510

520

500

$\beta = $

$\beta_1$ $\beta_2$

$\beta_1$ $\beta_2$ $\beta_K$

$\beta_1$

0

1

$\beta_2$

1

0

$\beta_3$

1

0

0

1

$\beta' = DR^n(\beta)$

530

FIG. 5

Determine occupancy configuration β
*602*

Dynamically reduce using $DR^n$
*604*

Lookup context index in LUT
*606*

Select context
*608*

Entropy code occupancy of current child cuboid
*610*

# FIG. 6

*FIG. 7*

*FIG. 8B*

*FIG. 8A*

FIG. 8C

$u+v+w = 1$

$0 \leq u, v, w$

910

(A,u)

(B,v)

P

912

(C,w)

$P = uA + vB + wC$

*FIG. 9B*

900

902

904

901

$P_{int}$

$P_{start}$

905

*FIG. 9A*

FIG. 10B

FIG. 10A

1110

1130

FIG. 11

FIG. 12

**FIG. 13**

FIG. 14

*point cloud 1511*

```
                    ┌──────────────────────────────────────────────────────────────────┐
                    │  obtain a spatial partitioning of the volume encompassing the point cloud  │
                    │                              1510                                  │
                    └──────────────────────────────────────────────────────────────────┘
```

1500

```
     ┌──────────────────────────────────────────────────────────────────────┐
     │  obtain a sub-volume of the spatial partitioning containing a portion of the point cloud  │ - - - →  *volume information 1522*
     │                              1520                                      │
     └──────────────────────────────────────────────────────────────────────┘
```

*sub-volume 1411*

```
                    ┌──────────────────────────────────────────────────────────────────┐
                    │                         obtain a model                             │
                    │                              1410                                  │
                    └──────────────────────────────────────────────────────────────────┘
```

*model 1413*

```
                    ┌──────────────────────────────────────────────────────────────────┐
                    │                       encode the model                             │  →  *model information 1422*
                    │                              1420                                  │
                    └──────────────────────────────────────────────────────────────────┘
```

*geometry information 1432*

```
                    ┌──────────────────────────────────────────────────────────────────┐
                    │        encode the portion of the point cloud based on the model    │  →
                    │                              1430                                  │
                    └──────────────────────────────────────────────────────────────────┘
```

◇ *1530*

bitstream
1490

# FIG. 15

*model 1413*

1420

obtain predictor for model information
1610

*predictor 1611*

encode the model information based on predictor
1620

*residual value 1622*

bitstream
1490

# FIG. 16

*already coded information*

*1700*

```
select context
1710
```

*ctxIdx*

context table

| 0 | 1 | | ▪▪▪ | | ▪▪▪ | $N_{ctx}$-1 |

*updated $p_{ctxIdx}$*

```
update context table
1730
```

$p_{ctxIdx}$

```
entropy encode using
probability $p_{ctxIdx}$
1720
```

```
bitstream
1490
```

*coded symbol $f_j$*

# FIG. 17

## FIG. 18

*1900*

obtain a spatial partitioning of the volume encompassing the point cloud 1910

*volume information 1522*

obtain a sub-volume of the spatial partition containing a portion of the point cloud 1920

*sub-volume 1411*

decode the model 1810

*model information 1422*

*model 1413*

decode the portion of the point cloud based on the model 1820

*geometry information 1432*

bitstream 1490

*decoded portion of the point cloud 1821*

1930

*FIG. 19*

*FIG. 20*

level = 0

level = 1

level = $L_{qual}$

level = $L_{qual}$+1

2010

2040

2020

2030

FIG. 21

EP 4 571 649 A1

obtain a spatial partitioning of a volume encompassing a point cloud
2210

obtain a sub-volume of the spatial partitioning containing a portion of the point cloud
2220

obtain a model
2230

encode the model
2240

encode the portion of the point cloud based on the model
2250

2260

2200

*FIG. 22*

obtain a spatial partitioning of the volume encompassing the point cloud
2310

obtain a sub-volume of the spatial partition containing a portion of the point cloud 2320

decode the model
2330

decode the portion of the point cloud based on the model
2340

2350

2300

*FIG. 23*

FIG. 24

FIG. 25

## EUROPEAN SEARCH REPORT

Europäisches
Patentamt
European
Patent Office
Office européen
des brevets

**Application Number**

EP 24 21 9831

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/320960 A1 (HUR HYEJUNG [KR] ET AL) 14 October 2021 (2021-10-14) <br> * paragraph [0144] - paragraph [0149]; figures 6,11 * <br> * paragraph [0304] - paragraph [0308]; figure 21 * <br> * paragraph [0271] * <br> - - - - - | 1-15 | INV. <br> G06T9/00 <br> G06T9/40 <br> H04N19/597 |
| X | "G-PCC 2nd edition codec description", 143. MPEG MEETING; 20230717 - 20230721; GENEVA; (MOTION PICTURE EXPERT GROUP OR ISO/IEC JTC1/SC29/WG11), <br> , <br> no. n23041 <br> 4 October 2023 (2023-10-04), XP030311995, Retrieved from the Internet: URL:https://dms.mpeg.expert/doc_end_user/d ocuments/143_Geneva/wg11/MDS23041_WG07_N00 648.zip MDS23041_WG07_N00648_v1.docx [retrieved on 2023-10-04] <br> * page 101, paragraph 10.2 - page 108, paragraph 10.12 * <br> * page 24, paragraph 3.9 - page 26 * <br> * page 27, paragraph 4 - page 29 * <br> - - - - - | 1-15 | |
| | | | **TECHNICAL FIELDS SEARCHED (IPC)** <br> G06T <br> H04N |

The present search report has been drawn up for all claims

| Place of search | Date of completion of the search | Examiner |
|---|---|---|
| Munich | 10 April 2025 | Moschetti, Fulvio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 9831

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | | Publication date |
|---|---|---|---|---|
| US 2021320960 A1 | 14-10-2021 | CN | 115428467 A | 02-12-2022 |
| | | CN | 117834863 A | 05-04-2024 |
| | | EP | 4131975 A1 | 08-02-2023 |
| | | KR | 102300045 B1 | 08-09-2021 |
| | | US | 2021320960 A1 | 14-10-2021 |
| | | WO | 2021210743 A1 | 21-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63609917